# EUROPEAN PATENT APPLICATION

(11) **EP 4 769 508 A1**
(43) Date of publication of application: **01.07.2026**
(21) Application number: 24892695.8
(22) Date of filing: 10.05.2024
(51) Int. Cl.: H01M 4/13, H01M 10/00

(54) **ELECTRODE ASSEMBLY AND PREPARATION METHOD THEREFOR, BATTERY, AND ELECTRIC DEVICE**

(30) Priority: 20.11.2023 CN 202311548956
(71) Applicant: Contemporary Amperex Technology Co., Limited, Ningde, Fujian 352100 (CN)
(72) Inventor: WU, Kai, Ningde, Fujian 352100 (CN); LING, Yangfang, Ningde, Fujian 352100 (CN); LI, Xuan, Ningde, Fujian 352100 (CN); SUN, Xin, Ningde, Fujian 352100 (CN)
(74) Representative: Gong, Jinping
(86) International application number: PCT/CN2024/092235
(87) International publication number: WO 2025/107529

(57) **Abstract**

An electrode assembly and a preparation method therefor, a battery, and an electrical apparatus. The electrode assembly comprises an electrode plate. The electrode plate comprises a current collector, an active layer, and a tab. The active layer is arranged on at least one side of the current collector in the thickness direction thereof, and the tab is arranged on one side of the current collector in the height direction thereof. In the direction from the side of the current collector where the tab is arranged to the opposite side and in the direction from the current collector to the side away from the current collector, the liquid absorption capacity of the active layer decreases gradually. By enabling the active layer to have different liquid absorption capacities for an electrolyte in a specific direction, the electrolyte wettability of the electrode assembly can be effectively improved. Moreover, the problem of reduced electrolyte wettability of the electrode plate due to the volume expansion or contraction of the electrode plate squeezing out the electrolyte during charging and discharging can also be addressed, thereby improving the electrolyte wettability of the electrode assembly.

## Description

The present application claims priority to Chinese Patent Application No. 202311548956.0, filed with the China Patent Office on November 20, 2023 and entitled "ELECTRODE ASSEMBLY AND PREPARATION METHOD THEREFOR, BATTERY, AND ELECTRICAL APPARATUS", which is incorporated herein by reference in its entirety.

### TECHNICAL FIELD

The present application relates to the technical field of batteries, in particular to an electrode assembly and a preparation method therefor, a battery, and an electrical apparatus.

### BACKGROUND

As a carrier of electrical energy, batteries are widely used in various fields. Various requirements are placed on batteries depending on their use. For example, batteries used in the power sector to provide electrical energy for automobiles, electric two-wheeled vehicles and other devices need to have high energy density and excellent cycle performance.

A battery assembly is a core component of a battery. During long-term storage and use of the battery, the electrolyte solution wettability of the electrode assembly will usually gradually deteriorate, affecting the performance of the battery.

### SUMMARY

The objects of examples of the present application are to provide an electrode assembly and a preparation method therefor, a battery, and an electrical apparatus, which can solve the problem of poor wettability of an electrode assembly, thereby reducing the battery resistance and improving the battery cycle performance.

### TECHNICAL SOLUTION

In the examples of the present application, the technical solutions as follows are used.

In a first aspect, an example of the present application provides an electrode assembly. The electrode assembly includes an electrode plate. The electrode plate includes a current collector, an active layer, and a tab, the active layer is arranged on at least one side of the current collector in a thickness direction thereof, and the tab is arranged on one side of the current collector in a height direction thereof.

In a direction from one side of the current collector where the tab is arranged to the other side opposite thereto, a liquid absorption capacity of a region of a side of the active layer close to the tab is greater than or equal to a liquid absorption capacity of a region of the other side opposite thereto, and a liquid absorption capacity of a region of at least one side of the active layer close to the tab is greater than a liquid absorption capacity of a region of the other side opposite thereto.

In a direction from the current collector to a side facing away from the current collector, a liquid absorption capacity of a region of a side of the active layer close to the current collector is greater than or equal to a liquid absorption capacity of a region of the other side opposite thereto, and a liquid absorption capacity of a region of at least one side of the active layer close to the current collector is greater than a liquid absorption capacity of a region of the other side opposite thereto.

In the present application, in the direction from the side of the current collector where the tab is arranged to the other side opposite thereto and in the direction from the current collector to the side facing away from the current collector, particular distribution design is performed on the liquid absorption capacity of the active layer, that is, the liquid absorption capacity of the region of the side of the active layer close to the tab (or close to the current collector) is greater than or equal to the liquid absorption capacity of the region of the other side opposite thereto, and the liquid absorption capacity of the region of at least one side of the active layer close to the tab (or close to the current collector) is greater than the liquid absorption capacity of the region of the other side opposite thereto, so that the electrode assembly having a three-dimensional matrix distribution structure can be formed. According to the electrode assembly with this structure, its active layer has the higher liquid absorption capacity on a portion close to the tab than on the other side opposite thereto. The tab is usually close to the top of the electrode assembly. After the electrode assembly is wetted with an electrolyte solution, the amount of the electrolyte solution absorbed by the top of the active layer is greater than that at the bottom of the active layer. During long-term storage and use of the electrode assembly, even if the electrolyte solution at the top tends to gather downward due to gravity, more electrolyte solution can still be retained, so that the electrolyte solution wettability of the active layer in this direction has higher uniformity, which can compensate for the problem of poor wettability caused by gravity causing the electrolyte solution to concentrate at the bottom of the active layer.

At the same time, in the direction from the current collector to the side facing away from the current collector, the region of the side of the active layer close to the current collector has the higher liquid absorption capacity. After being wetted with the electrolyte solution, the region closer to the current collector in the active layer will have a higher amount of the electrolyte solution, which can compensate for the problem of reduced electrolyte solution wettability or difficulty in wetting of the electrode plate due to the volume expansion or contraction that squeezes out the electrolyte solution during the charge and discharge process of the electrode plate.

Therefore, the example of the present application can effectively improve the electrolyte solution wettability of the active layer by performing particular distribution design on the liquid absorption capacity of the active layer in the direction from the side of the current collector where the tab is arranged to the other side opposite thereto, and from the current collector to the side facing away from the current collector, so that the active layer can be evenly wetted in different directions. The electrolyte solution wettability of the electrode assembly is mainly reflected by the active layer. Therefore, the improvement of the electrolyte solution wettability of the active layer is beneficial to the improvement of the electrolyte solution wettability of the entire electrode assembly. Improving the electrolyte solution wettability will help reduce battery resistance and improve battery cycle performance.

In some examples, in the direction from the side of the current collector where the tab is arranged to the other side opposite thereto, a liquid absorption capacity of a region of a side of a separator contained in the electrode assembly close to the tab is greater than or equal to a liquid absorption capacity of a region of the other side opposite thereto, and a liquid absorption capacity of a region of at least one side of the separator close to the tab is greater than a liquid absorption capacity of a region of the other side opposite thereto.

In the direction from the current collector to the side facing away from the current collector, the liquid absorption capacity of the active layer is greater than the liquid absorption capacity of the separator contained in the electrode assembly.

By adopting the variation design for the liquid absorption capacity of the separator in the direction from the side of the current collector where the tab is arranged to the other side opposite thereto, the liquid absorption capacity of a side of the separator close to the tab can be made higher, further improving the electrolyte solution wettability of the electrode assembly in this direction.

At the same time, in the direction from the current collector to the side facing away from the current collector, the liquid absorption capacity of the active layer is greater than the liquid absorption capacity of the separator contained in the electrode assembly, which can reduce the situation where the separator absorbs a large amount of electrolyte solution and causes insufficient electrolyte solution in the active layer, and improve the electrolyte solution wettability of the electrode plate in this direction.

In some examples, in the direction from the side of the current collector where the tab is arranged to the other side opposite thereto, at least one of the active layer and the separator contained in the electrode assembly includes at least two gradient units arranged adjacently, wherein a liquid absorption capacity of the gradient unit close to one side of the tab is greater than a liquid absorption capacity of the gradient unit on the other side opposite thereto. Optionally, the number of the gradient units is 2 to 10.

By arranging a plurality of gradient units in the direction from the side of the current collector where the tab is arranged to the other side opposite thereto, the liquid absorption capacity of the active layer and/or the separator in this direction can be gradually reduced layer by layer, and the gradient units at a lower position can provide a buffering effect for the downward movement of the electrolyte solution in the adjacent gradient units at a higher position, thereby helping to solve the problem of electrolyte solution concentration at the bottom of the electrode assembly caused by gravity during long-term storage and use of the electrode assembly, and improving the electrolyte solution wettability of the electrode assembly in this direction. At the same time, experiments in the examples of the present application show that, within a certain range, the more gradient units are arranged in this direction, the better the effect of improving the electrolyte solution wettability of the electrode assembly.

In some examples, a difference in liquid absorption capacity between the two adjacent gradient units is 1.1 times to 5 times, and optionally 1.2 times to 2 times.

The liquid absorption capacity of the two adjacent gradient units differs by a certain multiple, so that the gradient unit at the lower position can provide a good buffering effect for the downward movement of the electrolyte solution in the adjacent gradient unit at the higher position, thereby improving the electrolyte solution wettability in the direction from one side of the active layer close to the tab to the other side opposite thereto.

In some examples, in the direction from the side of the current collector where the tab is arranged to the other side opposite thereto, a height of any one of the gradient units accounts for 10% to 60% of a total height of the active layer or the separator, and optionally 10% to 50%.

Setting the heights of the gradient units in the direction from the side of the current collector where the tab is arranged to the other side opposite thereto within a suitable range is beneficial to increasing the number of the gradient units, thereby improving the electrolyte solution wettability of the electrode assembly in this direction.

In some examples, in the direction from the current collector to the side facing away from the current collector, the active layer includes at least two liquid absorption layers arranged adjacently, wherein a liquid absorption capacity of the liquid absorption layer close to one side of the current collector is greater than a liquid absorption capacity of the liquid absorption layer on the other side opposite thereto. Optionally, the number of the liquid absorption layers is 2 to 10.

By arranging the plurality of liquid absorption layers in the direction from the current collector to the side facing away from the current collector, the liquid absorption capacity of the active layer in this direction can be gradually reduced layer by layer. When the electrolyte solution is squeezed due to the volume change of the electrode plate, the liquid absorption layer on the side facing away from the current collector can provide a buffering effect for the electrolyte solution overflow tendency in the adjacent liquid absorption layer close to one side of the current collector. This is helpful to solve the problem of reduced electrolyte solution wettability or difficulty in wettability of the electrode plate due to the volume expansion or contraction that squeezes out the electrolyte solution during the charge and discharge process of the electrode plate, thereby improving the electrolyte solution wettability of the electrode assembly in this direction. At the same time, experiments show that, within a certain range, the more liquid absorbing layers are arranged in the direction from the current collector to the side facing away from the current collector, the better the effect of improving the electrolyte solution wettability of the electrode assembly.

In some examples, in the direction from the current collector to the side facing away from the current collector, a thickness of any one of the liquid absorption layers accounts for 10% to 60% of a total thickness of the active layer on one side of the current collector, and optionally 10% to 50%.

Setting the thickness of the liquid absorption layers in the direction from the current collector to the side facing away from the current collector within a suitable range is beneficial to increasing the number of the liquid absorption layers, thereby improving the electrolyte solution wettability of the electrode assembly in this direction.

In some examples, the active layer contains a first electrolyte solution absorbent.

In the direction from the side of the current collector where the tab is arranged to the other side opposite thereto, a mass content of the first electrolyte solution absorbent in a region of a side of the active layer close to the tab is greater than or equal to a mass content of the first electrolyte solution absorbent in a region of the other side opposite thereto, and a mass content of the first electrolyte solution absorbent in a region of at least one side of the active layer close to the tab is greater than a mass content of the first electrolyte solution absorbent in a region of the other side opposite thereto.

In the direction from the current collector to the side facing away from the current collector, a mass content of the first electrolyte solution absorbent in a region of a side of the active layer close to the current collector is greater than or equal to a mass content of the first electrolyte solution absorbent in a region of the other side opposite thereto, and a mass content of the first electrolyte solution absorbent in a region of at least one side of the active layer close to the current collector is greater than a mass content of the first electrolyte solution absorbent in a region of the other side opposite thereto.

By adding the electrolyte solution absorbent to the active layer and adjusting the mass content of the electrolyte solution absorbent to change along a certain direction, the electrode assembly can have different absorption and retention capabilities for the electrolyte solution in different regions, and exhibit a certain distribution pattern of liquid absorption capacity along a specific direction, which is beneficial to improving the electrolyte solution wettability of the electrode assembly.

In some examples, the separator contained in the electrode assembly includes a base membrane and a separator coating arranged on at least one side of the base membrane; and the separator coating includes a second electrolyte solution absorbent.

In the direction from the side of the current collector where the tab is arranged to the other side opposite thereto, a mass content of the second electrolyte solution absorbent in a region of a side of the separator coating close to the tab is greater than or equal to a mass content of the second electrolyte solution absorbent in a region of the other side opposite thereto, and a mass content of the second electrolyte solution absorbent in a region of at least one side of the separator coating close to the tab is greater than a mass content of the second electrolyte solution absorbent in a region of the other side opposite thereto.

In some examples, in the direction from the current collector to the side facing away from the current collector, the mass content of the first electrolyte solution absorbent in the active layer is greater than the mass content of the second electrolyte solution absorbent in the separator coating.

By adding the electrolyte solution absorbent to the separator coating and adjusting the mass content of the electrolyte solution absorbent to change along a certain direction, the electrode assembly can have different absorption and retention capabilities for the electrolyte solution in different regions, and exhibit a certain distribution pattern of liquid absorption capacity along a specific direction, which further improves the electrolyte solution wettability of the electrode assembly.

In some examples, the first electrolyte solution absorbent and the second electrolyte solution absorbent each independently include one or more of polymethyl methacrylate, polymethyl acrylate, polyethyl acrylate, polyvinyl acetate, polyacrylamide, polyacrylic acid, and polyacrylonitrile.

Such polymer material has a high affinity for the electrolyte solution and can swell and absorb the electrolyte solution to form a gel after contact with the electrolyte solution. By using these polymer materials as the electrolyte solution absorbents and adjusting the distribution of these polymer materials in the active layer and the separator coating, the electrode assembly can effectively exhibit a gradient/gradually-changing liquid absorption capacity along a specific direction, thereby improving the electrolyte solution wettability of the electrode assembly.

In some examples, the mass content of the first electrolyte solution absorbent in the active layer and the mass content of the second electrolyte solution absorbent in the separator coating are each independently greater than 0 and less than or equal to 8%; and optionally greater than or equal to 1% and less than or equal to 6%.

Setting the mass content of the electrolyte solution absorbents in the active layer and the separator coating within a suitable range is not only conducive to adjusting the liquid absorption capacity of different regions of the electrode assembly, but also will not cause a significant reduction in active substance in the active layer, thereby maintaining the stability of the capacity of the electrode plate.

In a second aspect, the present application provides a preparation method for an electrode assembly, including:
preparing an active layer on at least one side of the current collector in a thickness direction thereof, and arranging a tab on one side of the current collector in a height direction thereof;
controlling, in a direction from one side of the current collector where the tab is arranged to the other side opposite thereto, a liquid absorption capacity of a region of a side of the active layer close to the tab to be greater than or equal to a liquid absorption capacity of a region of the other side opposite thereto, and a liquid absorption capacity of a region of at least one side of the active layer close to the tab to be greater than a liquid absorption capacity of a region of the other side opposite thereto; and
controlling, in a direction from the current collector to a side facing away from the current collector, a liquid absorption capacity of a region of a side of the active layer close to the current collector to be greater than or equal to a liquid absorption capacity of a region of the other side opposite thereto, and a liquid absorption capacity of a region of at least one side of the active layer close to the current collector to be greater than a liquid absorption capacity of a region of the other side opposite thereto.

By making the active layer have different liquid absorption capacities for an electrolyte solution in specific directions, it is possible to compensate for the poor electrolyte solution wettability of the electrode assembly caused by the fact that the electrolyte solution tends to concentrate at the bottom of the electrode assembly due to gravity during long-term storage and use. It can also compensate for the problem of reduced electrolyte solution wettability of the electrode plate due to the volume expansion or contraction of the electrode plate that squeezes out the electrolyte solution during the charge and discharge process, thereby improving the electrolyte solution wettability of the electrode assembly.

In some examples, the preparation method for the electrode assembly further includes:
controlling, in a direction from one side of the current collector where the tab is arranged to the other side opposite thereto, a liquid absorption capacity of a region of a side of a separator contained in the electrode assembly close to the tab to be greater than or equal to a liquid absorption capacity of a region of the other side opposite thereto, and a liquid absorption capacity of a region of at least one side of the separator close to the tab to be greater than a liquid absorption capacity of a region of the other side opposite thereto; and
controlling, in the direction from the current collector to the side facing away from the current collector, the liquid absorption capacity of the active layer to be greater than the liquid absorption capacity of the separator.

By adopting the variation design for the liquid absorption capacity of the separator in the direction from the side of the current collector where the tab is arranged to the other side opposite thereto, the liquid absorption capacity of a side of the separator close to the tab can be made higher, further improving the electrolyte solution wettability of the electrode assembly in this direction. At the same time, in the direction from the current collector to the side facing away from the current collector, the liquid absorption capacity of the active layer is greater than the liquid absorption capacity of the separator contained in the electrode assembly, which can reduce the situation where the separator absorbs a large amount of electrolyte solution and causes insufficient electrolyte solution in the active layer, and improve the electrolyte solution wettability of the electrode plate in this direction.

In a third aspect, the present application provides a battery. The battery includes the electrode assembly according to the first aspect.

The above-mentioned electrode assembly has good electrolyte solution wettability. During long-term storage and use, the top of the electrode assembly and the inner side of the active layer of the electrode plate close to the current collector can be well wetted by an electrolyte solution. After applying the electrode assembly to the battery, the battery will exhibit low resistance and excellent cycle performance.

In a fourth aspect, the present application provides an electrical apparatus including the battery according to the third aspect.

The battery disclosed by the example of the present application can be used in the electrical apparatus using the battery as a power source, or various energy storage systems using the battery as an energy storage element, so as to be used to provide electric energy. The above-mentioned battery exhibits the advantages of low resistance and good cycle performance. Therefore, after the battery is applied to various electrical apparatuses, it is beneficial to improve the user experience of various electrical apparatuses.

### BRIEF DESCRIPTION OF DRAWINGS

In order to explain the technical solutions in the examples of the present application more clearly, the accompanying drawings needed in the description of the examples or demonstration technical descriptions will be briefly introduced below. Obviously, the accompanying drawings in the following descriptions are only some examples of the present application. For a person of ordinary skill in the art, other accompanying drawings can be obtained according to these accompanying drawings without creative work.
FIG. 1 is a schematic diagram of liquid absorption capacity variation of an electrode assembly according to an embodiment of the present application.
FIG. 2 is a schematic diagram of a gradient structure of a negative electrode plate and a separator in Example 1 of the present application.
FIG. 3 is a schematic diagram of a gradient structure of a negative electrode plate in Example 2 of the present application.
FIG. 4 is a schematic diagram of a gradient structure of a positive electrode plate in Example 3 of the present application.
FIG. 5 is a schematic diagram of a gradient structure of a positive electrode plate in Example 4 of the present application.
FIG. 6 is a schematic diagram of a gradient structure of a negative electrode plate in Example 5 of the present application.
FIG. 7 is a schematic diagram of a gradient structure of a positive electrode plate in Example 5 of the present application.
FIG. 8 is a schematic diagram of a gradient structure of a negative electrode plate in Comparative example 2 of the present application.
FIG. 9 is a schematic diagram of a gradient structure of a positive electrode plate in Comparative example 2 of the present application.
FIG. 10 is a schematic diagram of a gradient structure of an electrode assembly in Comparative example 3 of the present application.
FIG. 11 is a schematic diagram of a battery cell in an embodiment of the present application.
FIG. 12 is an exploded view of the battery cell in an embodiment of the present application as shown in FIG. 11.
FIG. 13 is a schematic diagram of a battery module according to an embodiment of the present application.
FIG. 14 is a schematic diagram of a battery pack according to an embodiment of the present application.
FIG. 15 is an exploded view of the battery pack in an embodiment of the present application as shown in FIG. 14.
FIG. 16 is a schematic diagram of an electrical apparatus in which a battery is used as a power source in an embodiment of the present application.

### Reference numerals:

D1-a direction from one side of a current collector where a tab is arranged to the other side opposite thereto, and D2-a direction from the current collector to a side facing away from the current collector;
10-negative electrode current collector, 11-first negative electrode active layer, 111-first gradient unit, 112-second gradient unit, 113-third gradient unit, 114-fourth gradient unit, 115-fifth gradient unit, and 116-sixth gradient unit;
20-positive electrode current collector, 21-first positive electrode active layer, 211-a-th gradient unit, 212-b-th gradient unit, 213-c-th gradient unit, 214-d-th gradient unit, 215-e-th gradient unit, and 216-f-th gradient unit;
30-separator, and 31-separator coating;
01-case, 02-cover plate, 03-electrode assembly, 04-battery cell, 05-battery module, 06-upper box body, and 07-lower box body.

### DESCRIPTION OF EMBODIMENTS

Embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally means that the associated objects before and after it are in an "or" relationship.

In the descriptions of the examples of the present application, the term "at least one" means one or more, and "more than one" means two or more. "At least one of the following" or similar expressions refers to any combination of these items, including any combination of single or plural items. For example, "at least one of a, b, or c", or "at least one of a, b and c", can both mean: a, b, c, a-b (i.e. a and b), a-c, b-c, or a-b-c, where a, b, c can be single or plural, respectively.

It should be understood that in the various examples of the present application, the magnitude of the serial numbers of the above processes does not imply the order of execution, some or all steps can be operated in parallel or in order and the execution order of the processes should be determined by their functions and internal logic, and should not constitute any limitation on the implementation process of the examples of the present application.

The weights of relevant components mentioned in the specification of examples of the present application can not only indicate the contents of the components, but also can denote the proportional relation of the weights of the components. Therefore, the specific contents of relevant components scaled up or down in accordance with those defined in the specification of the examples of the present application fall within the scope disclosed in the specification of the examples of the present application. Specifically, the mass described in the examples in the specification of the present application may be in mass units known in the chemical industry such as µg, mg, g, kg, etc.

As a carrier of electrical energy, batteries are widely used in various fields. Various requirements are placed on batteries by the market depending on their use. For example, batteries used in the power sector to provide electrical energy for automobiles, electric two-wheeled vehicles and other devices need to have high energy density and excellent cycle performance.

Among various batteries, the most widely used are those that use liquid as an electrolyte. Such batteries usually include electrode plates (positive electrode plates and negative electrode plates), with separators disposed between the positive electrode plates and the negative electrode plates. The positive electrode plates, the negative electrode plates and the separators are wound or laminated into electrode assemblies (cells JR), and the electrode assemblies are filled with electrolyte solutions. A common electrode assembly is placed in a vertical direction, namely a gravity direction. After the electrolyte solutions are injected into cases in which the electrode assemblies are mounted, the electrolyte solutions wet the positive electrode plates, the negative electrode plates and the separators. However, during long-term storage and use of the batteries, the electrolyte solutions generally tend to concentrate at the bottoms of the electrode assemblies due to gravity, while having poor wettability on the tops of the electrode assemblies.

At the same time, in order to improve an energy density, the related art usually increases a compaction density of the electrode plates as much as possible. The increase in compaction density will reduce pores of the electrode plates, making it difficult for the electrolyte solutions to wet the electrode plates, especially the difficulty in wetting of the electrolyte solutions at the inner sides of the electrode plates close to current collectors.

In addition, during the battery charge and discharge cycle, active metal ions, such as lithium ions and sodium ions, are repeatedly released and embedded in active materials of the electrode plates, causing the active materials to expand and contract in volume. During the expansion and contraction of the active materials, the surface pressure of the electrode plates increases, causing the electrolyte solutions stored inside the electrode plates to be squeezed out, resulting in a decrease in electrolyte solution wettability of the electrode plates, especially the electrolyte solution wettability in the inner layers of the electrode plates close to the current collectors is lower than that of the surface layers of the electrode plates.

Poor electrolyte solution wettability in the electrode assemblies will increase the migration resistance of active metal ions, causing the battery impedance to increase, resulting in increased electrode polarization and lithium precipitation, which will in turn cause the battery capacity to decay and reduce the battery cycle performance.

In order to solve the problem of poor electrolyte solution wettability of the electrode assemblies, an example of the present application designs an electrode assembly with a three-dimensional matrix gradient structure. The electrode assembly has a liquid absorption capacity with a specific distribution pattern along two specific directions, that is, a liquid absorption capacity of a region of a side of an active layer close to a tab (or close to a current collector) is greater than or equal to a liquid absorption capacity of a region of the other side opposite thereto, and a liquid absorption capacity of a region of at least one side of the active layer close to the tab (or close to the current collector) is greater than a liquid absorption capacity of a region of the other side opposite thereto. In this way, guided wetting of an electrolyte solution to the electrode assembly may be achieved, compensating for the uneven distribution of the electrolyte solution at the top and bottom of the electrode assembly caused by gravity, and alleviating the problem of difficulty in electrolyte solution wetting on an inner layer of an electrode plate close to the current collector, which is beneficial to reducing battery resistance and improving battery cycle performance.

The electrode assembly designed in the example of the present application may be applied to manufacturing batteries, thus being applied to various electrical apparatuses, including but not limited to a mobile phone, a tablet, a laptop, an electric toy, an electric tool, a battery vehicle, an electric vehicle, a ship, a spacecraft, and so on.

The present application is further described below in combination with examples. It should be understood that these examples are merely used for illustrating the present application, instead of limiting the scope of the present application.

### [Electrode assembly]

A first aspect of an example of the present application provides an electrode assembly. The electrode assembly includes an electrode plate. The electrode plate includes a current collector, an active layer, and a tab, the active layer is arranged on at least one side of the current collector in a thickness direction thereof, and the tab is arranged on one side of the current collector in a height direction thereof.

In a direction from one side of the current collector where the tab is arranged to the other side opposite thereto, a liquid absorption capacity of a region of a side of the active layer close to the tab is greater than or equal to a liquid absorption capacity of a region of the other side opposite thereto, and a liquid absorption capacity of a region of at least one side of the active layer close to the tab is greater than a liquid absorption capacity of a region of the other side opposite thereto.

In a direction from the current collector to a side facing away from the current collector, a liquid absorption capacity of a region of a side of the active layer close to the current collector is greater than or equal to a liquid absorption capacity of a region of the other side opposite thereto, and a liquid absorption capacity of a region of at least one side of the active layer close to the current collector is greater than a liquid absorption capacity of a region of the other side opposite thereto.

The detailed characteristics of the directions and the liquid absorption capacity therein are as follows.

### 1) Direction

The current collector is usually a metal sheet or a composite material sheet with a small thickness, and the active layer is arranged on one or both sides of the current collector in the thickness direction thereof. The height direction of the current collector refers to a direction perpendicular to the thickness direction of the current collector, and may be a width direction or a length direction of a plane perpendicular to the thickness direction of the current collector. The tab is arranged on one side of the current collector in the height direction thereof, so the direction from the side of the current collector where the tab is arranged to the other side opposite thereto is consistent with the height direction of the current collector. At the same time, the tab is usually close to the top of the electrode assembly, and the electrode assembly is usually in a vertical state, so the height direction of the current collector is usually consistent with the height direction of the electrode assembly and is also consistent with the gravity direction. Therefore, the direction from the side of the current collector where the tab is arranged to the other side opposite thereto is usually the gravity direction.

The direction from the current collector to the side facing away from the current collector is consistent with the thickness direction of the current collector, and more specifically, it can be a direction from one side of the active layer close to the current collector to one side of the active layer facing away from the current collector.

### 2) Liquid absorption capacity

A liquid absorption capacity of a sample reflects the sample's capacity to absorb and wet liquids. In the example of the present application, the liquid absorption capacity of the sample refers to the capacity of the sample to absorb and wet an electrolyte solution. Samples with different liquid absorption capacities show different liquid absorption speeds on a macroscopic scale, so the liquid absorption capacity may be tested as follows:
a certain area (e.g. 2*2 cm²) of a sample to be tested is taken and weighed to obtain M1, the sample is soaked in an electrolyte solution at a certain temperature (e.g. room temperature 25°C) for a certain time t (e.g. 1 h), the sample is taken out, the excess electrolyte solution on the surface is wiped off with dust-free paper, then the sample is weighed to obtain M2, and the liquid absorption speed of the sample is obtained, that is, the liquid absorption per unit time is m=(M2-M1)/t. Then the liquid absorption capacity F=σ*m/THK. Where σ is a porosity of the sample and THK is a sample thickness. The larger the F is, the faster the liquid absorption speed is and the stronger the liquid absorption capacity is.

For an electrode plate with active layers on double sides, the electrode plate needs to be wiped into having an active layer on a single side for testing in actual operations to prevent the situation where different designs on the two sides make it difficult to compare test results.

For the difference in liquid absorption capacity of different regions of the active layer in the direction from the side of the current collector where the tab is arranged to the other side opposite thereto of the electrode plate, the liquid absorption capacity of different regions can be tested by using the above method after taking the same electrode plate and sampling different regions in this direction.

For the difference in liquid absorption capacity of different regions of the active layer in the direction from the current collector to the side facing away from the current collector, namely the thickness direction of the electrode plate, it is necessary to compare a liquid absorption capacity Fₜₒₜₐₗ of the complete electrode plate and a liquid absorption capacity Fᵢₙₙₑᵣ of an inner layer after scraping off a surface layer of the electrode plate (the thickness after scraping is confirmed by a step thickness meter) to distinguish them. If Fᵢₙₙₑᵣ>Fₜₒₜₐₗ, it means that in this direction, the liquid absorption capacity of the region of the side of the active layer close to the current collector is greater than the liquid absorption capacity of the region of the other side opposite thereto.

F of the electrode plate is usually between 0.1 and 3.

It can be understood that, the electrode plate in the electrode assembly usually includes a positive electrode plate and a negative electrode plate, so that in a certain direction, the distribution condition of the liquid absorption capacity of the active layer that "the liquid absorption capacity of the region of the side of the active layer close to the tab (or close to the current collector) is greater than or equal to the liquid absorption capacity of the region of the other side opposite thereto, and the liquid absorption capacity of the region of at least one side of the active layer close to the tab (or close to the current collector) is greater than the liquid absorption capacity of the region of the other side opposite thereto" includes that the liquid absorption capacity of at least one of a positive electrode active layer and a negative electrode active layer in this direction has the above distribution condition.

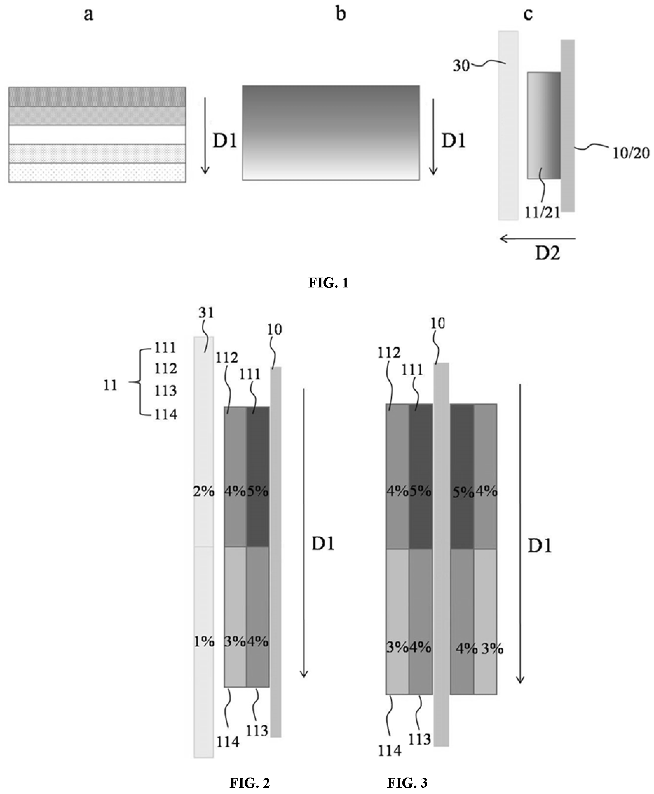

In a certain direction, "the liquid absorption capacity of the region of the side of the active layer close to the tab (or close to the current collector) is greater than or equal to the liquid absorption capacity of the region of the other side opposite thereto, and the liquid absorption capacity of the region of at least one side of the active layer close to the tab (or close to the current collector) is greater than the liquid absorption capacity of the region of the other side opposite thereto" includes a variety of situations, including but not limited to: 1) the liquid absorption capacity of the active layer gradually decreases in this direction; 2) the liquid absorption capacity of the active layer has a change tendency in this direction of gradually decreasing in a certain region and then remaining unchanged in a certain region; and 3) the liquid absorption capacity of the active layer has a change tendency in this direction of remaining unchanged in a certain region, then gradually decreasing, and then remaining unchanged. The gradual decrease in liquid absorption capacity of the active layer includes one or both of the distribution forms of gradient decrease or gradual decrease. The gradient decrease means that in this direction, the active layer may be divided into two or more gradient units, each gradient unit has a uniform or approximately uniform liquid absorption capacity, and the liquid absorption capacities of every two adjacent gradient units gradually decrease in this direction. Gradual decrease means that in this direction, the liquid absorption capacity of each region of the active layer shows a trend of continuous decrease. The situation where the liquid absorption capacity of the active layer decreases gradiently in the direction from the side of the current collector where the tab is arranged to the other side opposite thereto can refer to FIG. 1a, and the situation where the liquid absorption capacity of the active layer gradually decreases can refer to FIG. 1b. The darker the color in the figure, the higher the liquid absorption capacity.

In the example of the present application, in the direction from the side of the current collector where the tab is arranged to the other side opposite thereto and in the direction from the current collector to the side facing away from the current collector, particular distribution design is performed on the liquid absorption capacity of the active layer, that is, the liquid absorption capacity of the region of the side of the active layer close to the tab (or close to the current collector) is greater than or equal to the liquid absorption capacity of the region of the other side opposite thereto, and the liquid absorption capacity of the region of at least one side of the active layer close to the tab (or close to the current collector) is greater than the liquid absorption capacity of the region of the other side opposite thereto, so that the electrode assembly having a three-dimensional matrix distribution structure can be formed. According to the electrode assembly with this structure, its active layer has the higher liquid absorption capacity on a portion close to the tab than on the other side opposite thereto. The tab is usually close to the top of the electrode assembly. After the electrode assembly is wetted with an electrolyte solution, the amount of the electrolyte solution retained at the top of the active layer is greater than that at the bottom of the active layer. During long-term storage and use of the electrode assembly, even if the electrolyte solution at the top tends to gather downward due to gravity, more electrolyte solution can still be retained, so that the electrolyte solution wettability of the active layer in this direction has higher uniformity, which can compensate for the problem of poor wettability caused by gravity causing the electrolyte solution to concentrate at the bottom of the active layer.

At the same time, in the direction from the current collector to the side facing away from the current collector, the region of the side of the active layer close to the current collector has the higher liquid absorption capacity. After being wetted with the electrolyte solution, the region closer to the current collector in the active layer will have a higher retention amount of the electrolyte solution, which can compensate for the problem of reduced electrolyte solution wettability or difficulty in wetting of the electrode plate due to the volume expansion or contraction that squeezes out the electrolyte solution during the charge and discharge process of the electrode plate.

Therefore, the example of the present application can effectively improve the electrolyte solution wettability of the active layer by performing particular distribution design on the liquid absorption capacity of the active layer in the direction from the side of the current collector where the tab is arranged to the other side opposite thereto, and from the current collector to the side facing away from the current collector, so that the active layer can be evenly wetted in different directions. The electrolyte solution wettability of the electrode assembly is mainly reflected by the active layer. Therefore, the improvement of the electrolyte solution wettability of the active layer is beneficial to the improvement of the electrolyte solution wettability of the entire electrode assembly. Improving the electrolyte solution wettability will help reduce battery resistance and improve battery cycle performance.

In some embodiments, in the direction from the side of the current collector where the tab is arranged to the other side opposite thereto, a liquid absorption capacity of a region of a side of a separator contained in the electrode assembly close to the tab is greater than or equal to a liquid absorption capacity of a region of the other side opposite thereto, and a liquid absorption capacity of a region of at least one side of the separator close to the tab is greater than a liquid absorption capacity of a region of the other side opposite thereto.

In the direction from the current collector to the side facing away from the current collector, the liquid absorption capacity of the active layer is greater than the liquid absorption capacity of the separator.

Typically, an electrode assembly includes a separator and electrode plates, the electrode plates include a positive electrode plate and a negative electrode plate, the separator and the electrode plates are arranged alternately, and more specifically, they may be arranged alternately in the order of positive electrode plate-separator-negative electrode plate. For a laminated electrode assembly, laminating is performed in this order; for a wound electrode assembly, the electrode plates and the separator are arranged in this order and then wound.

For a test method of a liquid absorption capacity of different regions of the separator, reference can be made to the test method of the liquid absorption capacity and the method for determining the difference in liquid absorption capacity of different regions of the active layer described above. Typically, the liquid absorption capacity of the separator is between 1 and 15.

By adopting the variation design for the liquid absorption capacity of the separator in the direction from the side of the current collector where the tab is arranged to the other side opposite thereto, the liquid absorption capacity of a side of the separator close to the tab can be made higher, further improving the electrolyte solution wettability of the electrode assembly in this direction.

At the same time, in the direction from the current collector to the side facing away from the current collector, the liquid absorption capacity of the active layer is greater than the liquid absorption capacity of the separator contained in the electrode assembly, which can reduce the situation where the separator absorbs a large amount of electrolyte solution and causes insufficient electrolyte solution in the active layer, and improve the electrolyte solution wettability of the electrode plate in this direction.

It can be understood that, in the direction from the current collector to the side facing away from the current collector, the liquid absorption capacity of the region of the side of the active layer close to the current collector is greater than or equal to the liquid absorption capacity of the region of the other side opposite thereto, and the liquid absorption capacity of the region of at least one side of the active layer close to the current collector is greater than the liquid absorption capacity of the region of the other side opposite thereto. At the same time, the liquid absorption capacity of the active layer is greater than the liquid absorption capacity of the separator. Then, in this direction, the liquid absorption capacity of the electrode assembly is in the following relationship: the region of the side of the active layer close to the current collector > the region of the side of the active layer close to the separator > the separator. As shown in FIG. 1c, the darker the color in the figure, the higher the liquid absorption capacity.

At the same time, combined with the distribution condition of the liquid absorption capacities of the active layer and the separator in the direction from the side of the current collector where the tab is arranged to the other side opposite thereto, it can be understood that the active layer has the highest liquid absorption capacity (maximum value) in the regions of the side close to the current collector and the side close to the tab, while the separator has the lowest liquid absorption capacity in the region of the side facing away from the tab.

In some embodiments, in the direction from the side of the current collector where the tab is arranged to the other side opposite thereto, at least one of the active layer and the separator contained in the electrode assembly includes at least two gradient units arranged adjacently, wherein a liquid absorption capacity of the gradient unit close to one side of the tab is greater than a liquid absorption capacity of the gradient unit on the other side opposite thereto. Optionally, the number of the gradient units is 2 to 10, for example, any one of or a range value between any two of 2, 3, 4, 5, 6, 7, 8, 9 and 10.

By arranging the plurality of gradient units in the direction from the side of the current collector where the tab is arranged to the other side opposite thereto, the liquid absorption capacity of the active layer and/or the separator in this direction can be gradually reduced layer by layer, and the gradient units at a lower position can provide a buffering effect for the downward movement of the electrolyte solution in the adjacent gradient units at a higher position, thereby helping to solve the problem of electrolyte solution concentration at the bottom of the electrode assembly caused by gravity during long-term storage and use of the electrode assembly, and improving the electrolyte solution wettability of the electrode assembly in this direction. At the same time, experiments in the examples of the present application show that, within a certain range, the more gradient units are arranged in this direction, the better the effect of improving the electrolyte solution wettability of the electrode assembly.

In some embodiments, a difference in liquid absorption capacity between two adjacent gradient units is 1.1 times to 5 times, optionally 1.2 times to 2 times, for example, it may be any one of or a range value between any two of 1.1 times, 1.2 times, 1.4 times, 1.6 times, 1.8 times, 2 times, 2.5 times, 3 times, 3.5 times, 4 times, 4.5 times, and 5 times.

The liquid absorption capacity of the two adjacent gradient units differs by a certain multiple, so that the gradient unit at the lower position can provide a good buffering effect for the downward movement of the electrolyte solution in the adjacent gradient unit at the higher position, thereby improving the electrolyte solution wettability in the direction from one side of the active layer close to the tab to the other side opposite thereto.

In some embodiments, in the direction from the side of the current collector where the tab is arranged to the other side opposite thereto, the height of any one of the gradient units accounts for 10% to 60% of the total height of the active layer or the separator, and optionally 10% to 50%. For example, it may be any one of or a range value between any two of 10%, 15%, 20%, 25%, 30%, 35%, 40%, 45%, 50%, 55%, and 60%.

Setting the heights of the gradient units in the direction from the side of the current collector where the tab is arranged to the other side opposite thereto within a suitable range is beneficial to increasing the number of the gradient units, thereby improving the electrolyte solution wettability of the electrode assembly in this direction.

In some embodiments, in the direction from the current collector to the side facing away from the current collector, the active layer includes at least two liquid absorption layers arranged adjacently, wherein a liquid absorption capacity of the liquid absorption layer close to one side of the current collector is greater than a liquid absorption capacity of the liquid absorption layer on the other side opposite thereto. Optionally, the number of the liquid absorption layers is 2 to 10, for example, any one of or a range value between any two of 2, 3, 4, 5, 6, 7, 8, 9 and 10.

Considering that in the direction from the side of the current collector where the tab is arranged to the other side opposite thereto, the active layer may include at least two gradient units arranged adjacently, the liquid absorption capacity of the gradient unit close to one side of the tab is greater than the liquid absorption capacity of the gradient unit on the other side opposite thereto. Therefore, under certain conditions, a certain liquid absorption layer in the direction from the current collector to the side facing away from the current collector overlaps with a certain gradient unit in the direction from the side of the current collector where the tab is arranged to the other side opposite thereto.

By arranging the plurality of liquid absorption layers in the direction from the current collector to the side facing away from the current collector, the liquid absorption capacity of the active layer in this direction can be gradually reduced layer by layer. When the electrolyte solution is squeezed due to the volume change of the electrode plate, the liquid absorption layer on the side facing away from the current collector can provide a buffering effect for the electrolyte solution overflow tendency in the adjacent liquid absorption layer close to one side of the current collector. This is helpful to solve the problem of reduced electrolyte solution wettability or difficulty in wettability of the electrode plate due to the volume expansion or contraction that squeezes out the electrolyte solution during the charge and discharge process of the electrode plate, thereby improving the electrolyte solution wettability of the electrode assembly in this direction. At the same time, experiments show that, within a certain range, the more liquid absorbing layers are arranged in the direction from the current collector to the side facing away from the current collector, the better the effect of improving the electrolyte solution wettability of the electrode assembly.

In some embodiments, in the direction from the current collector to the side facing away from the current collector, the thickness of any one of the liquid absorption layers accounts for 10% to 60% of the total thickness of the active layer on one side of the current collector, and optionally 10% to 50%. For example, it may be any one of or a range value between any two of 10%, 15%, 20%, 25%, 30%, 35%, 40%, 45%, 50%, 55%, and 60%.

Setting the thickness of the liquid absorption layers in the direction from the current collector to the side facing away from the current collector within a suitable range is beneficial to increasing the number of the liquid absorption layers, thereby improving the electrolyte solution wettability of the electrode assembly in this direction.

In some embodiments, the active layer contains a first electrolyte solution absorbent.

In the direction from the side of the current collector where the tab is arranged to the other side opposite thereto, a mass content of the first electrolyte solution absorbent in a region of a side of the active layer close to the tab is greater than or equal to a mass content of the first electrolyte solution absorbent in a region of the other side opposite thereto, and a mass content of the first electrolyte solution absorbent in a region of at least one side of the active layer close to the tab is greater than a mass content of the first electrolyte solution absorbent in a region of the other side opposite thereto.

In the direction from the current collector to the side facing away from the current collector, a mass content of the first electrolyte solution absorbent in a region of a side of the active layer close to the current collector is greater than or equal to a mass content of the first electrolyte solution absorbent in a region of the other side opposite thereto, and a mass content of the first electrolyte solution absorbent in a region of at least one side of the active layer close to the current collector is greater than a mass content of the first electrolyte solution absorbent in a region of the other side opposite thereto.

The electrolyte solution absorbent refers to a material that has the ability to absorb an electrolyte solution. The active layer contains the electrolyte solution absorbent, that is, the electrolyte solution absorbent, an active substance, a conductive agent, a binder and other components together form the active layer. The mass content of the electrolyte solution absorbent in the active layer may be obtained by testing with one or a combination of an inductively coupled plasma instrument (ICP), an energy dispersive X-ray spectrometer (EDS), a hydrogen spectrometer, and a carbon spectrometer.

By adding the electrolyte solution absorbent to the active layer and adjusting the mass content of the electrolyte solution absorbent to change along a certain direction, the electrode assembly can have different absorption and retention capabilities for the electrolyte solution in different regions, and exhibit a certain distribution pattern of liquid absorption capacity along a specific direction, which is beneficial to improving the electrolyte solution wettability of the electrode assembly.

In some embodiments, the separator contained in the electrode assembly includes a base membrane and a separator coating arranged on at least one side of the base membrane; and the separator coating includes a second electrolyte solution absorbent.

In the direction from the side of the current collector where the tab is arranged to the other side opposite thereto, a mass content of the second electrolyte solution absorbent in a region of a side of the separator coating close to the tab is greater than or equal to a mass content of the second electrolyte solution absorbent in a region of the other side opposite thereto, and a mass content of the second electrolyte solution absorbent in a region of at least one side of the separator coating close to the tab is greater than a mass content of the second electrolyte solution absorbent in a region of the other side opposite thereto.

In some embodiments, in the direction from the current collector to the side facing away from the current collector, the mass content of the first electrolyte solution absorbent in the active layer is greater than the mass content of the second electrolyte solution absorbent in the separator coating.

The separator coating contains the electrolyte solution absorbent, that is, the electrolyte solution absorbent and other materials form the coating on at least one side of the base membrane. By adding the electrolyte solution absorbent to the separator coating and adjusting the mass content of the electrolyte solution absorbent to change along a certain direction, the electrode assembly can have different absorption and retention capabilities for the electrolyte solution in different regions, and exhibit a certain distribution pattern of liquid absorption capacity along a specific direction, which further improves the electrolyte solution wettability of the electrode assembly.

In some embodiments, the first electrolyte solution absorbent and the second electrolyte solution absorbent each independently include one or more of polymethyl methacrylate, polymethyl acrylate, polyethyl acrylate, polyvinyl acetate, polyacrylamide, polyacrylic acid, and polyacrylonitrile.

Such polymer material has a high affinity for the electrolyte solution and can swell and absorb the electrolyte solution to form a gel after contact with the electrolyte solution. By using these polymer materials as the electrolyte solution absorbents and adjusting the distribution of these polymer materials in the active layer and the separator coating, the electrode assembly can effectively exhibit a gradient/gradually-changing liquid absorption capacity along a specific direction, thereby improving the electrolyte solution wettability of the electrode assembly.

In some embodiments, the mass content of the first electrolyte solution absorbent in the active layer and the mass content of the second electrolyte solution absorbent in the separator coating are each independently greater than 0 and less than or equal to 8%; and optionally greater than or equal to 1% and less than or equal to 6%. For example, the mass content may be any one of or a range value between any two of 0.5%, 1%, 1.5%, 2%, 2.5%, 3%, 3.5%, 4%, 4.5%, 5%, 5.5%, 6%, 6.5%, 7%, 7.5% and 8%.

Setting the mass content of the electrolyte solution absorbents in the active layer and the separator coating within a suitable range is not only conducive to adjusting the liquid absorption capacity of different regions of the electrode assembly, but also will not cause a significant reduction in active substance in the active layer, thereby maintaining the stability of the capacity of the electrode plate.

In addition, the electrode plate of the electrode assembly includes the positive electrode plate and the negative electrode plate, and the separator is arranged between the positive electrode plate and the negative electrode plate and separates the positive electrode plate from the negative electrode plate. For other detailed technical features of the positive electrode plate, the negative electrode plate, and the separator in the electrode assembly, as well as a preparation method for the electrode assembly, please refer to the following content.

### 1. Positive electrode plate

The positive electrode plate may include a positive electrode current collector and a positive electrode active layer arranged on at least one side of the positive electrode current collector and containing a positive electrode active substance, a binder and a conductive agent.

The positive electrode active substance is a key substance involved in battery chemical reaction in the positive electrode plate. The conductive agent is used to collect microcurrents between the positive electrode active substance and between the positive electrode active substance and the positive electrode current collector to improve electronic conductivity. At the same time, the conductive agent can also promote wetting of the electrolyte solution into the positive electrode plate. The binder can improve the bonding strength between various substances in the positive electrode active layer, and between the positive electrode active layer and the positive electrode current collector. A thickening agent is helpful to increase the viscosity of a positive electrode slurry and improve the processing performance of the positive electrode slurry. The positive electrode current collector is used to transport electrons.

### 1.1. Positive electrode active substance

Depending on different types of batteries to which the electrode assembly is applied, different positive electrode active substances can be used in the positive electrode plate. The electrode assembly of the example of the present application can be applied to both lithium-ion batteries and sodium-ion batteries.

In a case where the electrode assembly is applied to the lithium-ion batteries, the positive electrode active substance may include one or more of lithium iron phosphate, lithium iron manganese phosphate, lithium vanadium phosphate, lithium nickel cobalt manganese oxide, lithium manganese oxide, lithium nickel oxide, lithium cobalt oxide, and lithium iron oxide.

In a case where the electrode assembly is applied to the sodium-ion batteries, the positive electrode active substance may include one or more of a layered oxide, a polyanionic compound, and a Prussian blue compound. For example, the layered oxide may include Na*ₓ*MO₂, M=Fe, Mn, Ni, Co, Cr, Sc, Ti, V, Cr, Cu, Zn, and combinations thereof, 0.4≤*x*≤1. The polyanionic compound may include one or more of phosphate, pyrophosphate, a sulfate radical type, and an anion-doped type.

A mass content of the positive electrode active substance in the positive electrode active layer is 80% to 98%, such as, but not limited to, any one of or a range value between any two of 80%, 82%, 84%, 86%, 88%, 90%, 92%, 94%, 96%, and 98%. It can be understood that setting the mass content of the positive electrode active substance in the active layer contained in the positive electrode plate at a higher level can increase the energy density of the batteries.

### 1.2. Conductive agent

The conductive agent may include one or more of acetylene black (SP), carbon nanotubes, conductive carbon black (super-P), Ketjen black, carbon fibers, and graphene.

A mass content of the conductive agent in the positive electrode active layer may be 0.5% to 5%, such as any one of or a range value between any two of 0.5%, 1%, 1.5%, 2%, 2.5%, 3%, 3.5%, 4%, 4.5%, and 5%, and the mass content may also be set as other contents as needed.

### 1.3. Binder

The binder may include, but is not limited to, one or more of polyvinylidene fluoride, polyvinylidene fluoride-hexafluoropropylene copolymer, polyethylene oxide, polyimide, polytetrafluoroethylene, polybutyl acrylate, polyacrylonitrile, carboxymethyl cellulose, carboxymethyl cellulose salts, polyacrylic acid, polyacrylate salts, polyvinyl alcohol, sodium alginate, cyclodextrin, styrene-butadiene rubber, vinyl acetate resin, acrylic resin, and chlorinated rubber.

A mass content of the binder in the positive electrode active layer is 0.5% to 5%, such as any one of or a range value between any two of 0.5%, 1%, 2%, 3%, 4%, and 5%.

### 1.4. Positive electrode current collector

The positive electrode active layer is arranged on at least one side of the positive electrode current collector, optionally on two sides of the positive electrode current collector. The positive electrode current collector may include, but is not limited to, a metal current collector, a carbon current collector, a conductive resin current collector, a composite current collector of metal and resin, etc., more specifically, aluminum, copper, nickel, titanium, iron and their respective alloys, stainless steel, carbon fiber, carbon nanotubes (CNTs), graphite, etc. Optionally, the positive electrode current collector includes aluminum.

### 2. Negative electrode plate

The negative electrode plate may include a negative electrode current collector and a negative electrode active layer arranged on at least one side of the negative electrode current collector and containing a negative electrode active substance, a binder and a conductive agent.

The negative electrode active substance may include one or more of graphite, hard carbon, soft carbon, mesophase carbon microbeads, graphene, silicon, and silicon dioxide. A mass content of the negative electrode active substance in the negative electrode active layer may include, but is not limited to, 90% to 98%, such as any one of or a range value between any two of 90%, 91%, 92%, 93%, 94%, 95%, 96%, 97%, and 98%.

The types of the conductive agent and the binder in the negative electrode plate and their mass contents in the negative electrode active layer may refer to the positive electrode plate and will not be described in detail here.

The negative electrode active layer further optionally includes a thickening agent, such as carboxymethyl cellulose (CMC). A mass content of the thickening agent in the active layer includes, but is not limited to, 0.5% to 5%, such as any one of or a range value between any two of 0.5%, 1%, 1.5%, 2%, 2.5%, 3%, 3.5%, 4%, 4.5%, and 5%.

The negative electrode current collector may include, but is not limited to, a metal current collector, a carbon current collector, a conductive resin current collector, a composite current collector of metal and resin, etc., more specifically, copper, nickel, titanium, iron and their respective alloys, stainless steel, carbon fiber, carbon nanotubes (CNTs), graphite, etc.

### 3. Separator

The separator in the electrode assembly includes a base membrane and a separator coating arranged on at least one side of the base membrane.

The base membrane may be selected from any porous separator with electrochemical and mechanical stability, such as single-layer or multi-layer films including one or more of glass fiber, non-woven fabric, polyethylene (PE), polypropylene (PP), and polyvinylidene fluoride (PVDF).

The separator coating generally also includes one or more inorganic materials and organic materials. The inorganic materials may include one or more of alumina and boehmite. These inorganic materials can improve the heat resistance, hardness, chemical stability, flame retardancy, etc. of the separator. The organic materials may include one or more of aramid, polyvinylidene fluoride, and polymethyl methacrylate (PMMA). These organic materials may be used as a binder to improve adhesion, or to improve the chemical stability and heat resistance of the separator.

### [Preparation method for electrode assembly]

The electrode assembly of the example of the present application may be prepared by the following method.

A second aspect of the present example provides a preparation method for an electrode assembly, including:
preparing an active layer on at least one side of a current collector in a thickness direction thereof, and arranging a tab on one side of the current collector in a height direction thereof;
controlling, in a direction from one side of the current collector where the tab is arranged to the other side opposite thereto, a liquid absorption capacity of a region of a side of the active layer close to the tab to be greater than or equal to a liquid absorption capacity of a region of the other side opposite thereto, and a liquid absorption capacity of a region of at least one side of the active layer close to the tab to be greater than a liquid absorption capacity of a region of the other side opposite thereto; and
controlling, in a direction from the current collector to a side facing away from the current collector, a liquid absorption capacity of a region of a side of the active layer close to the current collector to be greater than or equal to a liquid absorption capacity of a region of the other side opposite thereto, and a liquid absorption capacity of a region of at least one side of the active layer close to the current collector to be greater than a liquid absorption capacity of a region of the other side opposite thereto.

By making the active layer have different liquid absorption capacities for an electrolyte solution in specific directions, it is possible to compensate for the poor electrolyte solution wettability of the electrode assembly caused by the fact that the electrolyte solution tends to concentrate at the bottom of the electrode assembly due to gravity during long-term storage and use. It can also compensate for the problem of reduced electrolyte solution wettability of the electrode plate due to the volume expansion or contraction of the electrode plate that squeezes out the electrolyte solution during the charge and discharge process, thereby improving the electrolyte solution wettability of the electrode assembly.

The variation trend of the liquid absorption capacity of the active layer in different directions can be controlled by the following methods:
preparing an active layer containing a first electrolyte solution absorbent;
controlling, in the direction from the side of the current collector where the tab is arranged to the other side opposite thereto, a mass content of the first electrolyte solution absorbent in a region of a side of the active layer close to the tab to be greater than or equal to a mass content of the first electrolyte solution absorbent in a region of the other side opposite thereto, and a mass content of the first electrolyte solution absorbent in a region of at least one side of the active layer close to the tab to be greater than a mass content of the first electrolyte solution absorbent in a region of the other side opposite thereto; and
controlling, in the direction from the current collector to the side facing away from the current collector, a mass content of the first electrolyte solution absorbent in the active layer to gradually decrease, and controlling a mass content of the first electrolyte solution absorbent in a region of a side of the active layer close to the current collector to be greater than or equal to a mass content of the first electrolyte solution absorbent in a region of the other side opposite thereto, and a mass content of the first electrolyte solution absorbent in a region of at least one side of the active layer close to the current collector to be greater than a mass content of the first electrolyte solution absorbent in a region of the other side opposite thereto.

By adding the electrolyte solution absorbent to the active layer and adjusting the mass content of the electrolyte solution absorbent to change along a certain direction, the active layer can have different absorption and retention capabilities for the electrolyte solution in different regions, and exhibit a variable liquid absorption capacity along a specific direction, thereby improving the electrolyte solution wettability of the electrode assembly.

In some embodiments, the preparation method for the electrode assembly further includes:
controlling, in the direction from the side of the current collector where the tab is arranged to the other side opposite thereto, a liquid absorption capacity of a region of a side of a separator contained in the electrode assembly close to the tab to be greater than or equal to a liquid absorption capacity of a region of the other side opposite thereto, and a liquid absorption capacity of a region of at least one side of the separator close to the tab to be greater than a liquid absorption capacity of a region of the other side opposite thereto; and
controlling, in the direction from the current collector to the side facing away from the current collector, the liquid absorption capacity of the active layer to be greater than the liquid absorption capacity of the separator.

By adopting the variation design for the liquid absorption capacity of the separator in the direction from the side of the current collector where the tab is arranged to the other side opposite thereto, the liquid absorption capacity of a side of the separator close to the tab can be made higher, further improving the electrolyte solution wettability of the electrode assembly in this direction. At the same time, in the direction from the current collector to the side facing away from the current collector, the liquid absorption capacity of the active layer is greater than the liquid absorption capacity of the separator contained in the electrode assembly, which can reduce the situation where the separator absorbs a large amount of electrolyte solution and causes insufficient electrolyte solution in the active layer, and improve the electrolyte solution wettability of the electrode plate in this direction.

The liquid absorption capacity of the separator may be set by the following method: preparing a separator coating on at least one side of a base membrane to obtain the separator; wherein the separator coating includes a second electrolyte solution absorbent;
controlling, in the direction from the side of the current collector where the tab is arranged to the other side opposite thereto, a mass content of the second electrolyte solution absorbent in a region of a side of the separator coating close to the tab to be greater than or equal to a mass content of the second electrolyte solution absorbent in a region of the other side opposite thereto, and a mass content of the second electrolyte solution absorbent in a region of at least one side of the separator coating close to the tab to be greater than a mass content of the second electrolyte solution absorbent in a region of the other side opposite thereto; and
controlling, in the direction from the current collector to the side facing away from the current collector, the mass content of the first electrolyte solution absorbent in the active layer to be greater than the mass content of the second electrolyte solution absorbent in the separator coating.

By adding the electrolyte solution absorbent to the separator coating and adjusting the mass content of the electrolyte solution absorbent to change along a certain direction, the electrode assembly can have different absorption and retention capabilities for the electrolyte solution in different regions, and exhibit a variable liquid absorption capacity along a specific direction, which further improves the electrolyte solution wettability of the electrode assembly.

In the above preparation method, the method for preparing the active layer may include: mixing an active substance, a conductive agent, a binder, the first electrolyte solution absorbent (other components may also be added as needed) with a solvent to obtain an electrode plate slurry; and coating at least one side of the current collector with the electrode plate slurry, and performing drying and compacting.

Since the mass content of the first electrolyte solution absorbent in the active layer varies along a certain direction, electrode plate slurries containing different contents of first electrolyte solution absorbents can be prepared in advance, and coated in layers and different regions in sequence to form the active layer whose liquid absorption capacity varies according to a certain rule.

Similarly, for the preparation of the separator coating, the second electrolyte solution absorbent and other components in the separator coating and a solvent may be made into a slurry, and then at least one side of the base membrane is coated with the slurry. Since the mass content of the second electrolyte solution absorbent in the separator coating varies along a certain direction, slurries containing different contents of electrolyte solution absorbents can be prepared in advance, and coated in layers and different regions in sequence to form the separator coating whose liquid absorption capacity varies according to a certain rule.

In addition, the preparation method for the electrode assembly also includes: arranging electrode plates and the separator in sequence, and performing laminating or winding to obtain the electrode assembly. It can be understood that, the electrode plates of the electrode assembly include a positive electrode plate and a negative electrode plate, and the separator is arranged between the positive electrode plate and the negative electrode plate and separates the positive electrode plate from the negative electrode plate. Therefore, the step of arranging the electrode plates and the separator in sequence and performing laminating or winding more specifically includes: arranging the positive electrode plate and the negative electrode plate alternately, disposing the separator between the positive electrode plate and the negative electrode plate to separate the two, and performing laminating or winding to form the electrode assembly.

### [Battery]

A third aspect of an example of the present application provides a battery. The battery includes the electrode assembly according to the first aspect above.

The above-mentioned electrode assembly has good electrolyte solution wettability. During long-term storage and use, the top of the electrode assembly and the inner side of an active layer of an electrode plate close to a current collector can be well wetted by an electrolyte solution. After applying the electrode assembly to the battery, the battery will exhibit low resistance and excellent cycle performance.

The electrode assembly in the example of the present application may be a laminated electrode assembly or a wound electrode assembly. Therefore, the battery may be one or both of a laminated battery and a wound battery.

Generally, the battery further includes an electrolyte, an outer package, etc. in addition to the electrode assembly. Meanwhile, the battery in the example of the present application may include one or more of a battery cell, a battery module and a battery pack.

### 1. Electrolyte

An electrolyte may act as a carrier for ion transport in the battery. In the battery in the example of the present application, the electrolyte used may be a solid electrolyte, such as a polymer electrolyte, an inorganic solid electrolyte, etc., but is not limited thereto; and the electrolyte may also be an electrolyte solution.

The above electrolyte solution includes a solvent and a metal salt dissolved in the solvent.

The solvent may be a non-aqueous organic solvent, which may include one or more of the following: ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), and ethyl butyrate (EB). A combination of two or more solvents is preferred.

The battery in the example of the present application may include one or both of a lithium-ion battery and a sodium-ion battery. For the lithium-ion battery, a metal salt in an electrolyte solution of the lithium-ion battery includes a lithium salt; and for the sodium-ion battery, a metal salt in an electrolyte solution of the sodium-ion battery includes a sodium salt.

The lithium salt may include one or more of LiPF₆ (lithium hexafluorophosphate), LiBF₄ (lithium tetrafluoroborate), LiClO₄ (lithium perchlorate), LiAsF₆ (lithium hexafluoroarsenate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato)borate), LiBOB (lithium bis(oxalate)borate), LiPO₂F₂ (lithium difluorophosphate), LiDFOP (lithium difluorobis(oxalato)phosphate), and LiTFOP (lithium tetrafluoro(oxalato)phosphate).

The sodium salt may include one or more of sodium hexafluorophosphate (NaPF₆), sodium bis(fluorosulfonyl)imide (NaFSI), sodium trifluoromethanesulfonate (NaOTf), sodium sulfide (Na₂S), sodium chloride (NaCl), sodium fluoride (NaF), sodium sulfate (Na₂SO₄), sodium carbonate (Na₂CO₃), sodium phosphate (Na₃PO₄), sodium nitrate (NaNO₃), sodium difluorooxalylborate (NaDFOB), sodium pyrophosphate (Na₄P₂O₇), sodium dodecylbenzenesulfonate (SDBS), sodium dodecyl sulfate (SDS), trisodium citrate, sodium metaborate (NaBO₂), sodium borate (Na₂B₄O₇), sodium molybdate (Na₂MoO₄), sodium tungstate (Na₂WO₄), sodium bromide (NaBr), sodium nitrite (NaNO₂), sodium iodate (NaIO₃), sodium iodide (NaI), sodium silicate (Na₂SiO₃), sodium lignin sulfonate, sodium oxalate (Na₂C₂O₄), sodium aluminate (NaAlO₂), sodium methane sulfonate, sodium acetate (CH₃COONa), sodium dichromate (Na₂Cr₂O₇), sodium hexafluoroarsenate (NaAsF₆), sodium tetrafluoroborate (NaBF₄), and sodium perchlorate (NaClO₄).

The electrolyte solution further optionally contains other additives, including but not limited to one or more of vinylene carbonate (VC), vinyl ethylene carbonate (VEC), fluoroethylene carbonate (FEC), difluoroethylene carbonate (DFEC), trifluoromethyl ethylene carbonate (TFPC), succinonitrile (SN), adiponitrile (ADN), glutaronitrile (GLN), hexane tricarbonitrile (HTN), 1,3-propane sultone (1,3-PS), ethylene sulfate (DTD), methylene methanedisulfonate (MMDS), 1-propene-1,3-sultone (PST), 4-methyl ethylene sulfate (PCS), 4-ethyl ethylene sulfate (PES), 4-propyl ethylene sulfate (PEGLST), propylene sulfate (TS), 1,4-butane sultone (1,4-BS), ethylene sulfite (DTO), dimethyl sulfite (DMS), diethyl sulfite (DES), sulfonate cyclic quaternary ammonium salts, tris(trimethylsilyl) phosphate (TMSP), and tris(trimethylsilyl) borate (TMSB).

The electrolyte solution may further include an additive. For example, the additive may include a negative electrode film-forming additive and a positive electrode film-forming additive and may further include an additive that can improve certain performance of the battery, e.g., an additive that improves the overcharging performance of the battery and an additive that improves the high- or low-temperature performance of the battery.

The amount of the electrolyte solution injected into the battery may be determined based on a designed injection coefficient. The injection coefficient is electrolyte solution injection mass corresponding to a unit capacity. The electrolyte solution injection amount = cell design capacity * injection coefficient.

In the example of the present application, the injection coefficient of the battery may be set to 1 g/Ah to 5 g/Ah, optionally 1.2 g/Ah to 2 g/Ah, such as any one of or a range value between any two of 1 g/Ah, 1.2 g/Ah, 1.4 g/Ah, 1.6 g/Ah, 1.8 g/Ah, 2 g/Ah, 2.2 g/Ah, 2.4 g/Ah, 2.6 g/Ah, 2.8 g/Ah, 3 g/Ah, 3.2 g/Ah, 3.4 g/Ah, 3.6 g/Ah, 3.8 g/Ah, 4 g/Ah, 4.2 g/Ah, 4.4 g/Ah, 4.6 g/Ah, 4.8 g/Ah, and 5 g/Ah. The electrode assembly in the example of the present application can perform guided wetting on the electrolyte solution and has good electrolyte solution wettability even at a lower injection coefficient. Therefore, after the electrode assembly in the example of the present application is applied to the battery, it is beneficial to reduce the injection coefficient of the battery and reduce the electrolyte solution injection amount. Furthermore, experiments show that the electrode assembly in the example of the present application has an excellent improvement effect on the electrochemical performance of batteries with low injection coefficients.

### 2. Outer package

The battery may include an outer package. The outer package may be used to encapsulate an electrode assembly including a positive electrode plate, a negative electrode plate and a separator, as well as an electrolyte.

The outer package of the battery may be a hard case, such as a hard plastic case, an aluminum case, or a steel case. The outer package may further be a soft pouch, such as a bag-type soft pouch. The material of the soft pouch may be plastic, such as polypropylene, polybutylene terephthalate, and polybutylene succinate.

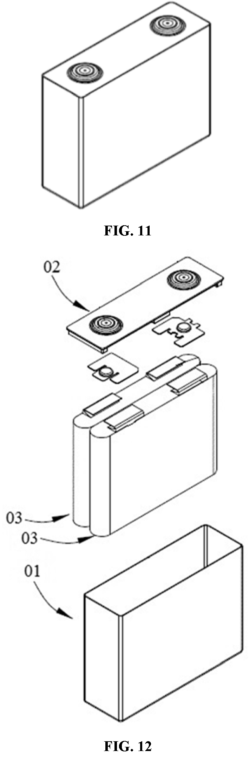

The shape of the outer package may be cylindrical, square, or any other shape. For example, FIG. 11 shows a battery cell with the shape of the outer package being a square structure as an example.

With reference to FIG. 12, the outer package may include a case 01 and a cover plate 02. The case 01 may include a bottom plate and side plates connected to the bottom plate, where the bottom plate and the side plates enclose to form an accommodating cavity. The case 01 is provided with an opening in communication with the accommodating cavity, and the cover plate 02 can cover the opening to close the accommodating cavity. The positive electrode plate, the negative electrode plate, and the separator can be made into the electrode assembly 03 by a winding process or a lamination process. One or more electrode assemblies 03 are encapsulated in the accommodating cavity. An electrolyte solution wets the electrode assembly 03.

### 3. Battery cell, battery module, and battery pack

The battery in the example of the present application may be at least one of a battery cell, a battery module and a battery pack. According to different packaging forms, batteries are divided into battery cells, battery modules and battery packs. The battery cell is the most basic unit of a secondary battery and includes an electrode assembly and an electrolyte. The electrode assembly is usually composed of a positive electrode plate, a negative electrode plate and a separating member. The positive electrode plate and the negative electrode plate are alternately laminated, and the separator is arranged between the positive electrode plate and the negative electrode plate to play a separating role, so as to obtain a bare cell, or the bare cell may be obtained after winding. The cell is placed in a housing, injected with an electrolyte solution and encapsulated to obtain the battery cell. The operation of the battery cell mainly relies on the movement of metal ions in the electrolyte between the positive electrode plate and the negative electrode plate.

In some battery encapsulating technologies, one or more battery cells may be first integrated into a battery module, and then one or more battery modules may be assembled into a battery pack. In some other battery encapsulating technologies, one or more battery cells may also be directly arranged in a box body to form the battery pack, thus removing the intermediate state of the battery module, thereby reducing the mass of the battery pack, and improving the energy density of the battery.

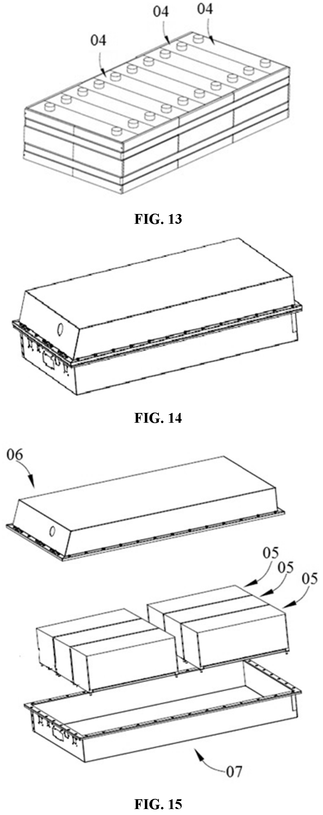

With reference to FIG. 13, it is a battery module as an example. In the battery module, a plurality of battery cells 04 may be sequentially arranged in a length direction of the battery module. Of course, any other arrangement is also possible. Furthermore, the plurality of battery cells 04 may be fixed by fasteners.

Optionally, the battery module may further include a housing having an accommodating space, and the plurality of battery cells 04 are accommodated in the accommodating space.

With reference to FIGS. 14 and 15, it is a battery pack as an example. The battery pack may include a battery box and a plurality of battery modules 05 provided in the battery box. The battery box includes an upper box body 06 and a lower box body 07, and the upper box body 06 can cover the lower box body 07 to form a closed space for accommodating the battery modules 05. The plurality of battery modules 05 can be arranged in the battery box in an arbitrary manner.

### [Electrical apparatus]

An example of the present application further provides an electrical apparatus. The electrical apparatus includes the battery according to the third aspect above.

The battery disclosed by the example of the present application can be used in the electrical apparatus using the battery as a power source, or various energy storage systems using the battery as an energy storage element, so as to be used to provide electric energy. The above-mentioned battery exhibits the advantages of low resistance and good cycle performance. Therefore, after the battery is applied to various electrical apparatuses, it is beneficial to improve the user experience of various electrical apparatuses.

The electrical apparatus may include, but is not limited to, a mobile phone, a tablet, a laptop, an electric toy, an electric tool, a battery car, an electric vehicle, a ship, a spacecraft, and the like. The electric toy may include fixed or mobile electric toys, such as game consoles, electric car toys, electric ship toys, and electric airplane toys. The spacecraft may include airplanes, rockets, space shuttles, spaceships, and the like. The electrical apparatus may select the battery cell, the battery module, or the battery pack in the battery according to use requirements thereof.

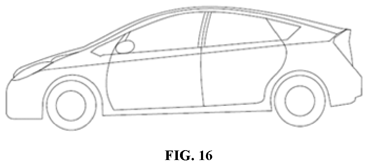

FIG. 16 is an electrical apparatus as an example. This electrical apparatus is an all-electric vehicle, a hybrid electric vehicle, or a plug-in hybrid electric vehicle, etc. In order to meet the requirements of the electrical apparatus on high power and high energy density of the battery, the battery pack or the battery module may be adopted.

Examples of the present application will be described in detail hereinafter. The examples described below are exemplary and only used to explain the present application, and are not to be construed as limiting the present application. In Examples in which no specific technologies or conditions are specified, technologies or conditions described in the literature in the art or product specifications are followed. All of the used agents or instruments which are not specified with the manufacturer are conventional commercially-available products.

In the following examples and comparative examples, for the sake of simplicity, D1 refers to a direction from one side of a current collector where a tab is arranged to the other side opposite thereto; for a positive electrode plate, D1 refers to a direction from one side of a positive electrode current collector where a positive electrode tab is arranged to the other side opposite thereto; and for a negative electrode plate, D1 refers to a direction from one side of a negative electrode current collector where a negative electrode tab is arranged to the other side opposite thereto. D2 refers to a direction from the current collector to a side facing away from the current collector; for the positive electrode plate, D2 refers to a direction from the positive electrode current collector to a side facing away from the positive electrode current collector; and for the negative electrode plate, D2 refers to a direction from the negative electrode current collector to a side facing away from the negative electrode current collector.

Meanwhile, it is considered that in the direction D1, an active layer may include at least two adjacently arranged gradient units with gradually decreasing liquid absorption capacities; and in the direction D2, the active layer includes at least two adjacently arranged liquid absorption layers with gradually decreasing liquid absorption capacities. In this way, a certain liquid absorption layer in the direction D2 will overlap with a certain gradient unit in the direction D1. Therefore, in the following examples and comparative examples, "gradient unit" is uniformly used to represent various regions with different liquid absorption capacities.

### Example 1

The present example provides a lithium-ion battery, including an electrode assembly composed of a positive electrode plate, a negative electrode plate and a separator, as well as an electrolyte solution and an outer package. The negative electrode plate and the separator include polyethyl acrylate (electrolyte solution absorbent) with a gradient content. The electrode assembly is placed in the outer package, and the electrolyte solution wets the electrode assembly.

The electrode assembly is composed of:

### 1) Negative electrode plate

The negative electrode plate includes a negative electrode current collector copper foil with a thickness of 8 µm and negative electrode active layers with a total thickness of 60 µm arranged on both surfaces of the negative electrode current collector, and a negative tab is arranged on one side of the negative electrode current collector in a height direction.

In the present example, the negative electrode active layer on one side of the negative electrode plate is provided with a plurality of gradient units with a gradiently decreasing mass content of polyethyl acrylate in the directions D1 and D2, that is, a single-sided gradient design.

As shown in FIG. 2, in the negative electrode plate, the negative electrode active layer (a first negative electrode active layer 11, with a thickness of 30 µm) on one side of the negative electrode current collector 10 includes, in a thickness direction of the negative electrode plate, a first gradient unit 111 and a second gradient unit 112 which are laminated, and a third gradient unit 113 and a fourth gradient unit 114 which are laminated. The first gradient unit 111 and the third gradient unit 113 are close to the negative electrode current collector 10, the first gradient unit 111 and the third gradient unit 113 are arranged in parallel along the height direction of the negative electrode current collector 10, and the first gradient unit 111 is close to the top of the negative electrode current collector 10; and the second gradient unit 112 and the fourth gradient unit 114 are arranged in parallel along the height direction of the negative electrode current collector 10, and the second gradient unit 112 is close to the top of the negative electrode current collector 10.

The first gradient unit 111, the second gradient unit 112, the third gradient unit 113 and the fourth gradient unit 114 have the same size (same length, width and thickness), and all contain polyethyl acrylate, graphite, 2.5 wt% styrene-butadiene rubber SBR, 0.5 wt% acetylene black SP and 1.2 wt% carboxymethyl cellulose CMC, wherein the total mass content of the polyethyl acrylate and the graphite is 95.8 wt%, and the mass contents of the polyethyl acrylate in the first gradient unit 111, the second gradient unit 112, the third gradient unit 113 and the fourth gradient unit 114 are 5%, 4%, 4% and 3%, respectively.

The negative electrode active layer (a second negative electrode active layer, with a thickness of 30 µm, not shown in FIG. 2) on the other side of the negative electrode current collector 10 includes 95.8 wt % graphite, 2.5 wt % SBR, 0.5 wt % SP, and 1.2 wt % CMC.

The negative electrode plate may be prepared by the following method:
four kinds of negative electrode slurries corresponding to the first gradient unit 111, the second gradient unit 112, the third gradient unit 113 and the fourth gradient unit 114 are prepared respectively, one side of the negative electrode current collector 10 is coated with the first gradient unit 111 and the third gradient unit 113 by an LOM (laminated entity manufacturing or layered entity manufacturing) extrusion coating device, followed by drying, and then the second gradient unit 112 and the fourth gradient unit 114 are coated side by side next to the first gradient unit 111 and the third gradient unit 113 by an LOM extrusion coating device, followed by drying again.

The negative electrode slurry corresponding to the other side of the negative electrode current collector 10 is coated and dried.

After coating and drying, cold pressing is performed to obtain the negative electrode plate.

### 2) Positive electrode plate

The positive electrode plate includes a positive electrode current collector aluminum foil with a thickness of 15 µm and positive electrode active layers with a total thickness of 80 µm arranged on both surfaces of the positive electrode current collector, and each positive electrode active layer contains 96 wt % lithium nickel cobalt manganese oxide NCM111, 3 wt % polyvinylidene fluoride PVDF and 1 wt % acetylene black SP.

NCM111, PVDF and SP are mixed, N-methylpyrrolidone is added and stirred, and dispersion is performed to obtain a positive electrode slurry. The aluminum foil is coated with the positive electrode slurry, and cold-pressed to obtain the positive electrode plate.

### 3) Separator

The separator includes a base membrane (a PE membrane with a thickness of 12 µm) and a separator coating with a thickness of 3 µm disposed on one side of the base membrane. With reference to FIG. 2, the separator coating 31 contains two gradient units with mass contents of polyethyl acrylate of 2% and 1% respectively. The separator coating 31 further includes PVDF with a mass content of 3% and the balance alumina, and the mass content of polyethyl acrylate increases from bottom to top along the height direction of the negative electrode current collector 10. That is, the gradient unit with the mass content of polyethyl acrylate of 2% is close to the top of the negative electrode current collector 10.

### 4) Lithium-ion battery

The positive electrode plate, the separator and the negative electrode plate are arranged in sequence, so that the separator is positioned between the positive electrode plate and the negative electrode plate to serve for separation. The first negative electrode active layer 11 of the negative electrode plate is close to the separator coating 13. After arrangement, an electrode assembly is obtained by winding. The electrode assembly is placed in an outer package, a prepared electrolyte solution (1M LiPF₆, EMC:EC volume ratio of 7:3, injection coefficient of 1.2 g/Ah) is injected, and encapsulating, injection, formation, exhaust and other processes are performed to obtain a wound hard-case lithium-ion battery.

### Example 2

The difference between the present example and Example 1 is that, the negative electrode active layers on two sides of the negative electrode plate are both provided with a plurality of gradient units with a gradiently decreasing mass content of polyethyl acrylate in the directions D1 and D2, that is, a double-sided gradient design.

That is, in the present example, the second negative electrode active layer of the negative electrode plate has the same structure as the first negative electrode active layer, and includes four gradient units with mass contents of polyethyl acrylate of 5%, 4%, 4%, and 3%, respectively. The distribution positions of the four gradient units in the second negative electrode active layer are symmetrical with the first gradient unit 111 and the second gradient unit 112, as well as the third gradient unit 113 and the fourth gradient unit 114, as shown in FIG. 3.

### Example 3

The difference between the present example and Example 2 is that, the positive electrode active layer on one side of the positive electrode plate is provided with a plurality of gradient units with a gradiently decreasing mass content of polyethyl acrylate in the directions D1 and D2, that is, a single-sided gradient design.

Specifically, in the present example, the positive electrode plate includes a positive electrode current collector aluminum foil with a thickness of 15 µm and positive electrode active layers with a total thickness of 80 µm arranged on both surfaces of the positive electrode current collector, and a positive tab is arranged on one side of the positive electrode current collector in the height direction.

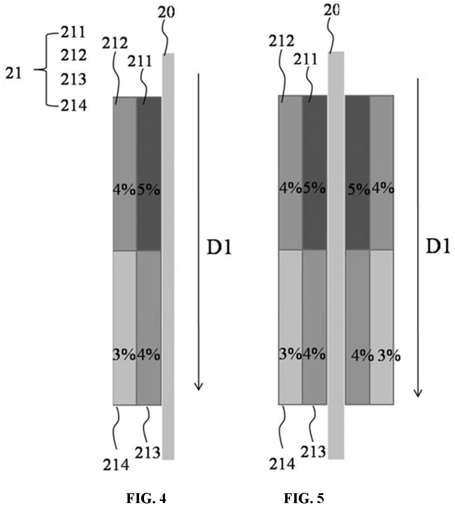

With reference to FIG. 4, the positive electrode active layer (a first positive electrode active layer 21, with a thickness of 40 µm) on one side of the positive electrode current collector 20 includes, in the thickness direction of the positive electrode plate, an a-th gradient unit 211 and a b-th gradient unit 212 which are laminated, and a c-th gradient unit 213 and a d-th gradient unit 214 which are laminated. The a-th gradient unit 211 and the c-th gradient unit 213 are close to the positive electrode current collector 20, the a-th gradient unit 211 and the c-th gradient unit 213 are arranged in parallel along the height direction of the positive electrode current collector 20, and the a-th gradient unit 211 is close to the top of the positive electrode current collector 20; and the b-th gradient unit 212 and the d-th gradient unit 214 are arranged in parallel along the height direction of the positive electrode current collector 20, and the b-th gradient unit 212 is close to the top of the positive electrode current collector 20.

The a-th gradient unit 211, the b-th gradient unit 212, the c-th gradient unit 213 and the d-th gradient unit 214 have the same size (same length, width and thickness), and all contain polyethyl acrylate, NCM111, 3 wt% PVDF and 1 wt% SP, wherein the total mass content of the polyethyl acrylate and the NCM111 is 96 wt%, and the mass contents of the polyethyl acrylate in the a-th gradient unit 211, the b-th gradient unit 212, the c-th gradient unit 213 and the d-th gradient unit 214 are 5%, 4%, 4% and 3%, respectively.

The positive electrode active layer (a second positive electrode active layer, with a thickness of 40 µm, not shown in FIG. 4) on the other side of the positive electrode current collector contains 96 wt % NCM111, 3 wt % PVDF and 1 wt % SP.

### Example 4

The difference between the present example and Example 3 is that, the positive electrode active layers on both sides of the positive electrode plate are provided with a plurality of gradient units with a gradiently decreasing mass content of polyethyl acrylate in the directions D1 and D2, that is, a double-sided gradient design.

That is, in the present example, the second positive electrode active layer of the positive electrode plate has the same structure as the first positive electrode active layer, and includes four gradient units with mass contents of polyethyl acrylate of 5%, 4%, 4%, and 3%, respectively. The distribution positions of the four gradient units in the positive electrode plate are symmetrical with the a-th gradient unit 211 and the b-th gradient unit 212, as well as the c-th gradient unit 213 and the d-th gradient unit 214, as shown in FIG. 5.

### Example 5

The difference between the present example and Example 4 is that, in the negative electrode plate, the first negative electrode active layer and the second negative electrode active layer both have two more additional gradient units with mass contents of polyethyl acrylate of 6% and 5% respectively; and at the same time, in the positive electrode plate, the first positive electrode active layer and the second positive electrode active layer both have two more additional gradient units with mass contents of polyethyl acrylate of 6% and 5% respectively.

Specifically, the structures of the negative electrode plate and the positive electrode plate in the present example are as follows:

### 1) Negative electrode plate

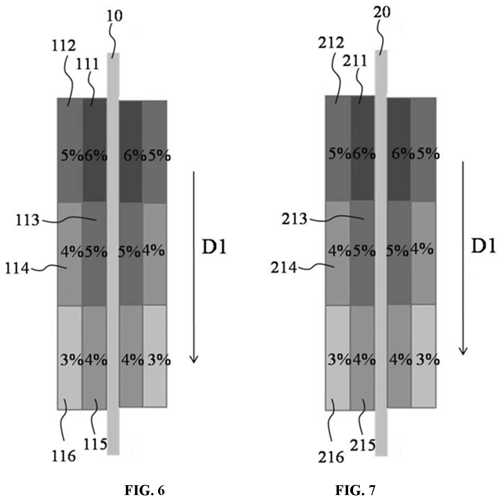

With reference to FIG. 6, in the present example, the first negative electrode active layer 11 (thickness of 30 µm) on one side of the negative electrode current collector 10 includes, in the thickness direction of the negative electrode plate, a first gradient unit 111 and a second gradient unit 112 which are laminated, a third gradient unit 113 and a fourth gradient unit 114 which are laminated, and a fifth gradient unit 115 and a sixth gradient unit 116 which are laminated. The first gradient unit 111, the third gradient unit 113 and the fifth gradient unit 115 are close to the negative electrode current collector 10, the first gradient unit 111, the third gradient unit 113 and the fifth gradient unit 115 are arranged in sequence along the height direction of the negative electrode current collector 10, and the first gradient unit 111 is close to the top of the negative electrode current collector 10; and the second gradient unit 112, the fourth gradient unit 114 and the sixth gradient unit 116 are arranged in parallel along the height direction of the negative electrode current collector 10, and the second gradient unit 112 is close to the top of the negative electrode current collector 10.

The first gradient unit 111, the second gradient unit 112, the third gradient unit 113, the fourth gradient unit 114, the fifth gradient unit 115 and the sixth gradient unit 116 have the same size (same length, width and thickness), and all contain polyethyl acrylate, graphite, 2.5 wt% SBR, 0.5 wt% SP and 1.2 wt% CMC, wherein the total mass content of the polyethyl acrylate and the graphite is 95.8 wt%, and the mass contents of the polyethyl acrylate in the first gradient unit 111, the second gradient unit 112, the third gradient unit 113, the fourth gradient unit 114, the fifth gradient unit 115 and the sixth gradient unit 116 are 6%, 5%, 5%, 4%, 4% and 3%, respectively.

The second negative electrode active layer on the other side of the negative electrode current collector 10 has a symmetrical structure to the first negative electrode active layer.

### 2) Positive electrode plate

With reference to FIG. 7, in the positive electrode plate in the present example, the positive electrode active layer (first positive electrode active layer 21, with a thickness of 40 µm) on one side of the positive electrode current collector 20 includes, in the thickness direction of the positive electrode plate, an a-th gradient unit 211 and a b-th gradient unit 212 which are laminated, a c-th gradient unit 213 and a d-th gradient unit 214 which are laminated, and an e-th gradient unit 215 and an f-th gradient unit 216 which are laminated. The a-th gradient unit 211, the c-th gradient unit 213 and the e-th gradient unit 215 are close to the positive electrode current collector 20, the a-th gradient unit 211, the c-th gradient unit 213 and the e-th gradient unit 215 are arranged in sequence along the height direction of the positive electrode current collector 20, and the a-th gradient unit 211 is close to the top of the positive electrode current collector 20; and the b-th gradient unit 212, the d-th gradient unit 214 and the d-th gradient unit 214 are arranged in parallel along the height direction of the positive electrode current collector 20, and the b-th gradient unit 212 is close to the top of the positive electrode current collector 20.

The a-th gradient unit 211, the b-th gradient unit 212, the c-th gradient unit 213, the d-th gradient unit 214, the e-th gradient unit 215 and the f-th gradient unit 216 have the same size, and all contain polyethyl acrylate, NCM111, 3 wt% PVDF and 1 wt% SP, wherein the total mass content of the polyethyl acrylate and the NCM111 is 96 wt%, and the mass contents of the polyethyl acrylate in the a-th gradient unit 211, the b-th gradient unit 212, the c-th gradient unit 213, the d-th gradient unit 214, the e-th gradient unit 215 and the f-th gradient unit 216 are 6%, 5%, 5%, 4%, 4% and 3%, respectively.

The second positive electrode active layer on the other side of the positive electrode current collector 20 has a symmetrical structure to the first positive electrode active layer.

### Example 6

The difference between the present example and Example 4 is that, the injection coefficient of the electrolyte solution is 2 g/Ah.

### Comparative example 1

The difference between this comparative example and Examples 1 to 5 is that, the negative electrode plate, the positive electrode plate and the separator do not contain polyethyl acrylate.

That is, in this comparative example, the negative electrode plate includes a copper foil having a thickness of 8 µm and negative electrode active layers provided on both surfaces of the copper foil. The total thickness of the two negative electrode active layers is 60 µm, and both the negative electrode active layers contain 95.8 wt % graphite, 2.5 wt % styrene-butadiene rubber (SBR), 0.5 wt % SP and 1.2 wt % CMC.

The positive electrode plate includes an aluminum foil with a thickness of 15 µm and positive electrode active layers provided on both surfaces of the aluminum foil. The total thickness of the two positive electrode active layers is 80 µm, and both the positive electrode active layers contain 96 wt% NCM111, 3 wt% PVDF and 1 wt% SP.

### Comparative example 2

The difference between this comparative example and Example 5 is that, both the negative electrode active layer and the positive electrode active layer are provided with a plurality of gradient units with a gradiently decreasing mass content of polyethyl acrylate only in the direction D1, while there are no plurality of gradient units with a gradiently decreasing mass content of polyethyl acrylate in the direction D2; and at the same time, the separator coating of the separator does not contain polyethyl acrylate.

The structures of the negative electrode plate and the positive electrode plate in this comparative example are as follows:

### 1) Negative electrode plate

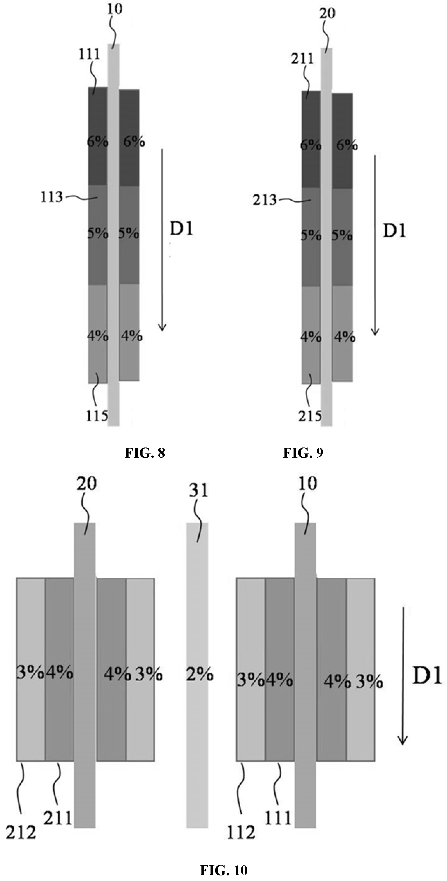

With reference to FIG. 8, in this comparative example, the first negative electrode active layer 11 (with a thickness of 30 µm) on one side of the negative electrode current collector 10 of the negative electrode plate includes a first gradient unit 111, a third gradient unit 113 and a fifth gradient unit 115, the first gradient unit 111, the third gradient unit 113 and the fifth gradient unit 115 are arranged in parallel along the height direction of the negative electrode current collector 10, and the first gradient unit 111 is close to the top of the negative electrode current collector 10.

The first gradient unit 111, the third gradient unit 113 and the fifth gradient unit 115 have the same size (same length, width and thickness), and all contain polyethyl acrylate, graphite, 2.5 wt% SBR, 0.5 wt% SP and 1.2 wt% CMC, wherein the total mass content of the polyethyl acrylate and the graphite is 95.8 wt%, and the mass contents of the polyethyl acrylate in the first gradient unit 111, the third gradient unit 113 and the fifth gradient unit 115 are 6%, 5%, and 4%, respectively.

The second negative electrode active layer on the other side of the negative electrode current collector 10 has a symmetrical structure to the first negative electrode active layer.

### 3) Positive electrode plate

With reference to FIG. 9, in the positive electrode plate in this comparative example, the positive electrode active layer (the first positive electrode active layer 21, with a thickness of 40 µm) on one side of the positive electrode current collector 20 includes an a-th gradient unit 211, a c-th gradient unit 213, a d-th gradient unit 214, and an e-th gradient unit 215, the a-th gradient unit 211, the c-th gradient unit 213, and the e-th gradient unit 215 are arranged in sequence along the height direction of the positive electrode current collector 20, and the a-th gradient unit 211 is close to the top of the positive electrode current collector 20.

The a-th gradient unit 211, the c-th gradient unit 213 and the e-th gradient unit 215 have the same size, and all contain polyethyl acrylate, NCM111, 3 wt% PVDF and 1 wt% SP, wherein the total mass content of the polyethyl acrylate and the NCM111 is 96 wt%, and the mass contents of the polyethyl acrylate in the a-th gradient unit 211, the c-th gradient unit 213 and the e-th gradient unit 215 are 6%, 5% and 4%, respectively.

The second positive electrode active layer on the other side of the positive electrode current collector 20 has a symmetrical structure to the first positive electrode active layer.

### Comparative example 3

The difference between this comparative example and Example 5 is that, both the negative electrode active layer and the positive electrode active layer are provided with a plurality of gradient units with a gradiently decreasing mass content of polyethyl acrylate only in the direction D2, while there are no plurality of gradient units with a gradiently decreasing mass content of polyethyl acrylate in the direction D1; and at the same time, the separator coating of the separator contains polyethyl acrylate which is distributed evenly.

Specifically, the structures of the negative electrode plate, the positive electrode plate, and the separator in this comparative example are as follows:

### 1) Negative electrode plate

With reference to FIG. 10, in this comparative example, the first negative electrode active layer 11 (thickness of 30 µm) on one side of the negative electrode current collector 10 includes a first gradient unit 111 and a second gradient unit 112 which are laminated in the thickness direction of the negative electrode plate, wherein the first gradient unit 111 is close to the negative electrode current collector 10.

The first gradient unit 111 and the second gradient unit 112 have the same size, and both contain polyethyl acrylate, graphite, 2.5 wt% SBR, 0.5 wt% SP and 1.2 wt% CMC, wherein the total mass content of the polyethyl acrylate and the graphite is 95.8 wt%, and the mass contents of the polyethyl acrylate in the first gradient unit 111 and the second gradient unit 112 are 4% and 3%, respectively.

The second negative electrode active layer on the other side of the negative electrode current collector 10 has a symmetrical structure to the first negative electrode active layer.

### 2) Positive electrode plate

With reference to FIG. 10, in the positive electrode plate in this comparative example, the first positive electrode active layer 21 (with a thickness of 40 µm) on one side of the positive electrode current collector 20 includes an a-th gradient unit 211 and a b-th gradient unit 212 which are laminated in the thickness direction of the positive electrode plate, wherein the a-th gradient unit 211 is close to the positive electrode current collector 20.

The a-th gradient unit 211 and the b-th gradient unit 212 have the same size, and both contain polyethyl acrylate, NCM111, 3 wt% PVDF and 1 wt% SP, wherein the total mass content of the polyethyl acrylate and the NCM111 is 96 wt%, and the mass contents of the polyethyl acrylate in the a-th gradient unit 211 and the b-th gradient unit 212 are 4% and 3%, respectively.

The second positive electrode active layer on the other side of the positive electrode current collector 20 has a symmetrical structure to the first positive electrode active layer.

### 3) Separator

With reference to FIG. 10, the separator in this comparative example includes a base membrane (a PE membrane with a thickness of 12 µm), and a separator coating with a thickness of 3 µm disposed on one side of the base membrane, wherein the separator coating 31 includes polyethyl acrylate with a mass content of 2%.

### Comparative example 4

The difference between this comparative example and Comparative example 1 is that, the injection coefficient of the electrolyte solution is 2 g/Ah.

The design of the gradient units of the positive electrode plate, the positive electrode plate and the separator in each example and comparative example is as shown in the following table.

**[Table 1]**

| | [Positive electrode plate] | | | [Negative electrode plate] | | | Separator |
|---|---|---|---|---|---|---|---|
| | Gradient design direction | Single-sided/double-sided | Gradient mass content of polyethyl acrylate | Gradient design direction | Single-sided/double-sided | Gradient mass content of polyethyl acrylate | Gradient mass content of polyethyl acrylate |
| Example 1 | / | / | / | D1+D2 | Single | 5%-4% | 2% |
| | | | | | | 4%-3% | 1% |
| Example 2 | / | / | / | D1+D2 | Double | 5%-4% | 2% |
| | | | | | | 4%-3% | 1% |
| Example 3 | D1+D2 | Single | 5%-4% | D1+D2 | Double | 5%-4% | 2% |
| | | | 4%-3% | | | 4%-3% | 1% |
| Example 4 and Example 6 | D1+D2 | Double | 5%-4% | D1+D2 | Double | 5%-4% | 2% |
| | | | 4%-3% | | | 4%-3% | 1% |
| Example 5 | D1+D2 | Double | 6%-5% | D1+D2 | Double | 6%-5% | 2% |
| | | | 5%-4% | | | 5%-4% | 1% |
| | | | 4%-3% | | | 4%-3% | |
| Comparative example 1 and Comparative example 4 | / | / | / | / | / | / | / |
| Comparative example 2 | D1 | Double | 6% | D1 | Double | 6% | 2% |
| | | | 5% | | | 5% | 1% |
| | | | 4% | | | 4% | |
| Comparative example 3 | D2 | Double | 4%-3% | D2 | Double | 4%-3% | 2% |

In Table 1, "gradient design direction" refers to a gradient distribution direction of the mass content of the polyethyl acrylate in the positive electrode plate or the negative electrode plate, including D1 and D2.

"Single-sided" means that the active layer on the single side of the positive electrode plate or the negative electrode plate is designed with gradient units with a gradient distribution of the mass content of the polyethyl acrylate, and "double-sided" means that the active layers on double sides of the positive electrode plate or the negative electrode plate are both designed with gradient units with a gradient distribution of the mass content of the polyethyl acrylate.

"Gradient mass content of polyethyl acrylate" refers to the mass content of the polyethyl acrylate contained in each gradient unit in the positive electrode plate, the negative electrode plate or the separator. In Table 1, vertical data in the cell of "Gradient mass content of polyethyl acrylate" represents the mass content distribution of the polyethyl acrylate along the direction D1, and horizontal data represents the mass content distribution of the polyethyl acrylate along the direction D2.

### [Liquid absorption capacity]

The liquid absorption capacity of each gradient unit containing different mass contents of polyethyl acrylate in the positive electrode plate, the negative electrode plate, and the separator is tested. In order to make the test operation more convenient and the results more intuitive, the complete positive electrode plate, negative electrode plate or separator corresponding to each gradient unit is first prepared, and then the liquid absorption capacity is tested. The test method is as follows.

### Sample preparation:

1) Polyethyl acrylate, graphite, SBR, SP, CMC and water are mixed to form a negative electrode slurry, which is then coated on both surfaces of a copper foil (8 µm thick), and dried and cold-pressed to form negative electrode active layers each with a thickness of 30 µm on both surfaces of the copper foil. The contents of components in the negative electrode slurry are: 2.5 wt% SBR, 0.5 wt% SP and 1.2 wt% CMC, where the total mass content of the polyethyl acrylate and the graphite is 95.8 wt%, and the mass contents of the polyethyl acrylate are 6%, 5%, 4%, 3% and 0%, respectively. Samples 1, 2, 3, 4 and 5 corresponding to the gradient units containing different mass contents of polyethyl acrylate in the negative electrode plate are obtained, and the mass of each sample is the same.
2) NCM111, PVDF, SP and NMP (N-methylpyrrolidone) are mixed to form a positive electrode slurry, which is coated on both surfaces of an aluminum foil (15 µm thick), and dried and cold-pressed to form positive electrode active layers each with a thickness of 40 µm on both surfaces of the aluminum foil. The contents of components in the positive electrode slurry are: 3 wt% PVDF and 1 wt% SP, where the total mass content of the polyethyl acrylate and the NCM111 is 96 wt%, and the mass contents of the polyethyl acrylate are 6%, 5%, 4%, 3% and 0%, respectively. Samples a, b, c, d and e corresponding to the gradient units containing different mass contents of polyethyl acrylate in the positive electrode plate are obtained, and the mass of each sample is the same.
3) A 3 µm thick separator coating is coated on a 12 µm thick PE membrane, and the mass contents of polyethyl acrylate in the separator coating are controlled to be 2%, 1%, and 0%, to obtain samples A, B, and C corresponding to the gradient units containing different mass contents of polyethyl acrylate in the separator, and the mass of each sample is the same.

### Test of liquid absorption capacity:

A sample to be tested is cut into a size of 2*2 cm², weighed to obtain mass M1, and soaked in an electrolyte solution (the electrolyte solution composition is the same as in Example 1) at room temperature 25°C for 1 h. The sample is taken out and the excess electrolyte solution on the surface is wiped off with dust-free paper. Then weighing is performed to obtain M2, and then the amount of liquid absorbed by the sample per unit time (1 h) is m(g) = M2-M1. Then the liquid absorption capacity F=σ*m/THK. Where σ is a porosity of the sample, THK is a sample thickness (mm), and the F dimension is g/mm.

**[Table 2]**

| | Sample | Mass content of polyethyl acrylate | Liquid absorption capacity F |
|---|---|---|---|
| Test 1 (negative electrode plate) | Sample 1 | 6% | 1.37 |
| | Sample 2 | 5% | 1.23 |
| | Sample 3 | 4% | 1.19 |
| | Sample 4 | 3% | 0.90 |
| | Sample 5 | 0% | 0.42 |
| Test 2 (positive electrode plate) | Sample a | 6% | 1.25 |
| | Sample b | 5% | 1.04 |
| | Sample c | 4% | 0.88 |
| | Sample d | 3% | 0.51 |
| | Sample e | 0% | 0.34 |
| Test 3 (separator) | Sample A | 2% | 7.6 |
| | Sample B | 1% | 3.1 |
| | Sample C | 0% | 2.3 |

The test results reflect that at different mass contents of the polyethyl acrylate, the samples have different liquid absorption capacities for the electrolyte solution. Therefore, in Examples 1 to 5, the positive electrode plate, the negative electrode plate and the separator contain the polyethyl acrylate with a gradient distribution in mass content, and the positive electrode plate, the negative electrode plate and the separator have a gradient distribution of liquid absorption capacity.

Specifically, the positive electrode plate, the negative electrode plate, and the separator in Examples 1 to 5 contain the polyethyl acrylate with gradiently decreasing mass contents along the direction D1, and the mass contents of the polyethyl acrylate at the top of the positive electrode plate, the top of the negative electrode plate, and the top of the separator are higher than those at the respective bottoms. Correspondingly, the liquid absorption capacities of the top of the positive electrode plate, the top of the negative electrode plate, and the top of the separator are higher than those at the respective bottoms, and along the direction D1, the liquid absorption capacities of the positive electrode plate, the negative electrode plate, and the separator gradually decrease.

At the same time, the positive electrode plate, the negative electrode plate, and the separator in Examples 1 to 5 contain the polyethyl acrylate with a gradient distribution of mass content in the direction D2, and the mass content of the polyethyl acrylate in the side of the positive electrode active layer and/or the negative electrode active layer close to the current collector is higher than that in the separator. Correspondingly, the liquid absorption capacities of the positive electrode plate, the negative electrode plate, and the separator are in a gradient distribution along the direction D2.

### [Electrochemical performance]

1. The electrochemical performance of the lithium-ion batteries in Examples 1 to 5 and Comparative examples 1 to 3 (with a liquid injection coefficient of 1.2 g/Ah) is tested. The test results are as shown in Tables 3 and 4 below.

**[Table 3]**

| | Battery internal impedance IMP/ohom | DC impedance 30%SOC DCR @2C 30s/mohm | Cycle number at 0.5C under 25°C with 80% capacity retention |
|---|---|---|---|
| Example 1 | 36.2 | 28 | 1387 |
| Example 2 | 33.7 | 24 | 1408 |
| Example 3 | 22.6 | 23 | 1534 |
| Example 4 | 14.2 | 22 | 1572 |
| Example 5 | 13.0 | 21 | 1673 |
| Comparative example 1 | 40.3 | 31 | 1341 |
| Comparative example 2 | 39.1 | 30 | 1355 |
| Comparative example 3 | 38.9 | 30 | 1358 |

**[Table 4]**

| | Battery internal impedance change rate | DC impedance change rate | Cycle number change rate |
|---|---|---|---|
| Example 1 | -10.2% | -9.7% | +3.4% |
| Example 2 | -16.4% | -22.6% | +5.0% |
| Example 3 | -43.9% | -25.8% | +14.4% |
| Example 4 | -64.8% | -29.0% | +17.2% |
| Example 5 | -67.7% | -32.3% | +24.8% |
| Comparative example 1 | 0 | 0 | 0 |
| Comparative example 2 | -3.0% | -3.2% | +1.0% |
| Comparative example 3 | -3.5% | -3.2% | +1.3% |

The performance change rates in Table 4 refer to change rates calculated according to Table 3 compared with Comparative example 1.

The test results show that compared with Comparative example 1 in which no gradient design of liquid absorption capacity is performed in the directions D1 and D2, Examples 1 to 5 simultaneously provide the gradient units containing gradiently decreasing mass contents of the polyethyl acrylate in the positive electrode plate, the negative electrode plate, and the separator along D1 and D2, so that the electrode assembly has gradiently decreasing liquid absorption capacities along the two directions, which can reduce the battery internal impedance and the DC impedance, increase the cycle number of the battery, and improve the cycle performance of the battery. Moreover, as the number of the gradient units increases, the battery internal impedance and the DC impedance become lower, and the cycle performance of the battery becomes better.

The improvement in battery performance in Examples 1 to 5 is mainly due to the fact that the liquid absorption capacities of the positive electrode plate, the negative electrode plate, and the separator at the tops are greater than those at the bottoms, which can compensate for the problem that the electrolyte solution usually tends to concentrate at the bottom of the electrode assembly due to gravity during long-term storage and use, and the wettability at the top of the electrode assembly is poor; and at the same time, the liquid absorption capacity of the side of the positive electrode plate and/or the negative electrode plate close to the current collector is greater than that on the side of the separator, which compensates for the problem of reduced electrolyte solution wettability of the side of the electrode plate close to the current collector or difficulty in wetting due to the volume expansion or contraction that squeezes out the electrolyte solution during the charge and discharge process of the positive electrode plate and the negative electrode plate, thereby improving the electrolyte solution wettability inside the electrode plate. The improvement of electrolyte solution wettability is beneficial to promoting electrochemical reactions in the battery and accelerating the transport of lithium ions, thereby reducing the battery internal impedance and the DC impedance; and after long-term cycling, the top of the electrode assembly and the inside of the electrode plate maintain good electrolyte solution wettability, thereby improving the cycle performance of the battery.

2. The electrochemical performance of the lithium-ion batteries in Example 6 and Comparative example 4 (with a liquid injection coefficient of 2 g/Ah) is tested. The test results are as shown in Tables 5 and 6 below.

**[Table 5]**

| | Battery internal impedance IMP/ohom | DC impedance 30%SOC DCR @2C 30s/mohm | Cycle number at 0.5C under 25°C with 80% capacity retention |
|---|---|---|---|
| Example 6 | 8.0 | 18 | 1855 |
| Comparative example 4 | 8.5 | 19 | 1806 |

**[Table 6]**

| | Battery internal impedance change rate | DC impedance change rate | Cycle number change rate |
|---|---|---|---|
| Example 6 | -5.9% | -5.3% | +2.7% |
| Comparative example 4 | 0 | 0 | 0 |

The performance change rates in Table 6 refer to change rates calculated based on Table 5 compared with Comparative example 4.

The test results show that at a high injection coefficient, the battery internal impedance, the DC impedance and the cycle performance in Example 6 are also improved compared with those in Comparative example 4.

Moreover, by combining Table 6 with Table 4 for analysis, it can be seen that at a low injection coefficient of 1.2 g/Ah, the battery internal impedance in Example 4 is reduced by 64.8% compared with that in Comparative example 1, the DC impedance is reduced by 29.0%, and the cycle number is increased by 17.2%; while in the case of the same electrode assembly structure, Example 6 adopts a higher injection coefficient of 2 g/Ah, and compared with Comparative example 4, the battery internal impedance is reduced by 5.9%, the DC impedance is reduced by 5.3%, and the cycle number is increased by 2.7%. The improvement effect of battery performance at the low injection coefficient of 1.2 g/Ah in Example 4 is more obvious than the improvement at the high injection coefficient of 2 g/Ah, indicating that by designing the positive electrode plate, the negative electrode plate, and the separator to have a gradient distribution of liquid absorption capacity in the specific directions, the electrochemical performance of the battery with the low injection coefficient is improved better.

### [Test method for electrochemical performance]

### 1. Battery internal impedance IMP

At 25°C, a battery is charged to 4.2 V at 0.33 C constant current, then charged at 4.2 V constant voltage until the current reaches 0.05 C, and then discharged at 0.33 C for 30 min. Afterwards, positive and negative probes of a TH2523A alternating current impedance tester are made in contact with positive and negative electrodes of the battery respectively to carry out testing at an alternating current of 1000 Hz, and a battery internal impedance IMP is directly read from the tester.

### 2. DC impedance

At 25°C, a battery is charged to 4.2 V at 0.33 C constant current, then charged at 4.2 V constant voltage until the current reaches 0.05 C, and then discharged to 2.5 V at 0.33 C, and a discharge capacity C₀ is recorded. The battery continues to be discharged at 0.33C to 30% of the battery discharge capacity C₀, and a voltage V₁ is recorded; and then the battery is discharged at 2 C (I₁) for 30 s, and a voltage V₂ is recorded. The DC impedance is calculated by dividing the discharge voltage drop by current in this section, that is, DCR (30%SOC DCR @2C 30s) = (V₁-V₂)/I₁.

### 3. Cycle performance

At 25°C, a battery is charged to 4.2 V at 0.5 C constant current, then charged at 4.2 V constant voltage until the current reaches 0.05 C, and then discharged to 2.5 V at 1 C, and an initial discharge capacity C₁ is recorded, which is a charge and discharge process. The charge and discharge cycle is repeated until the capacity retention drops to 80% of the initial discharge capacity C₁, and at this time the test is stopped, and a cycle number is recorded.

### 4. Porosity

A test method for the porosity σ of the sample involved in the liquid absorption capacity testing process is: cutting the sample into 20 circular samples with a diameter of 14 mm, recording weights and thicknesses, and calculating a volume density. The circular samples are placed in a sample cup of a true density porosity tester, and using helium gas displacement, combined with the Archimedes' principle and the Boyle's law, the true volume of an electrode plate is obtained, from which the true density is calculated. The porosity is equal to (1-volume density/true density)* 100%.

Finally, it should be noted that: the above examples are merely used for illustrating rather than limiting the technical solutions of the present application. Although the present application has been described in detail with reference to the various afore-mentioned examples, those of ordinary skill in the art should understand that the technical solutions specified in the various aforementioned examples can still be modified, or some or all of the technical features therein can be equivalently substituted; and such modifications or substitutions do not make the essence of the corresponding technical solutions depart from the scope of the technical solutions of the various examples of the present application, which shall fall within the scope of the claims and the specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. An electrode assembly comprising an electrode plate, wherein the electrode plate comprises a current collector, an active layer, and a tab, the active layer is arranged on at least one side of the current collector in a thickness direction thereof, and the tab is arranged on one side of the current collector in a height direction thereof;
in a direction from one side of the current collector where the tab is arranged to the other side opposite thereto, a liquid absorption capacity of a region of a side of the active layer close to the tab is greater than or equal to a liquid absorption capacity of a region of the other side opposite thereto, and a liquid absorption capacity of a region of at least one side of the active layer close to the tab is greater than a liquid absorption capacity of a region of the other side opposite thereto; and
in a direction from the current collector to a side facing away from the current collector, a liquid absorption capacity of a region of a side of the active layer close to the current collector is greater than or equal to a liquid absorption capacity of a region of the other side opposite thereto, and a liquid absorption capacity of a region of at least one side of the active layer close to the current collector is greater than a liquid absorption capacity of a region of the other side opposite thereto.

2. The electrode assembly according to claim 1, wherein in the direction from the side of the current collector where the tab is arranged to the other side opposite thereto, a liquid absorption capacity of a region of a side of a separator contained in the electrode assembly close to the tab is greater than or equal to a liquid absorption capacity of a region of the other side opposite thereto, and a liquid absorption capacity of a region of at least one side of the separator close to the tab is greater than a liquid absorption capacity of a region of the other side opposite thereto; and
in the direction from the current collector to the side facing away from the current collector, the liquid absorption capacity of the active layer is greater than the liquid absorption capacity of the separator.

3. The electrode assembly according to claim 1 or 2, wherein in the direction from the side of the current collector where the tab is arranged to the other side opposite thereto, at least one of the active layer and the separator contained in the electrode assembly comprises at least two gradient units arranged adjacently, wherein a liquid absorption capacity of the gradient unit close to one side of the tab is greater than a liquid absorption capacity of the gradient unit on the other side opposite thereto; and optionally, the number of the gradient units is 2 to 10.

4. The electrode assembly according to claim 3, wherein a difference in liquid absorption capacity between the two adjacent gradient units is 1.1 times to 5 times, and optionally 1.2 times to 2 times.

5. The electrode assembly according to claim 3 or 4, wherein in the direction from the side of the current collector where the tab is arranged to the other side opposite thereto, a height of any one of the gradient units accounts for 10% to 60% of a total height of the active layer or the separator, and optionally 10% to 50%.

6. The electrode assembly according to any one of claims 1 to 5, wherein in the direction from the current collector to the side facing away from the current collector, the active layer comprises at least two liquid absorption layers arranged adjacently, wherein a liquid absorption capacity of the liquid absorption layer close to one side of the current collector is greater than a liquid absorption capacity of the liquid absorption layer on the other side opposite thereto; and optionally, the number of the liquid absorption layers is 2 to 10.

7. The electrode assembly according to claim 6, wherein, in the direction from the current collector to the side facing away from the current collector, a thickness of any one of the liquid absorption layers accounts for 10% to 60% of a total thickness of the active layer arranged on one side of the current collector, and optionally 10% to 50%.

8. The electrode assembly according to any one of claims 1 to 7, wherein the active layer contains a first electrolyte solution absorbent; and in the direction from the side of the current collector where the tab is arranged to the other side opposite thereto, a mass content of the first electrolyte solution absorbent in a region of a side of the active layer close to the tab is greater than or equal to a mass content of the first electrolyte solution absorbent in a region of the other side opposite thereto, and a mass content of the first electrolyte solution absorbent in a region of at least one side of the active layer close to the tab is greater than a mass content of the first electrolyte solution absorbent in a region of the other side opposite thereto; and
in the direction from the current collector to the side facing away from the current collector, a mass content of the first electrolyte solution absorbent in a region of a side of the active layer close to the current collector is greater than or equal to a mass content of the first electrolyte solution absorbent in a region of the other side opposite thereto, and a mass content of the first electrolyte solution absorbent in a region of at least one side of the active layer close to the current collector is greater than a mass content of the first electrolyte solution absorbent in a region of the other side opposite thereto.

9. The electrode assembly according to claim 8, wherein the separator contained in the electrode assembly comprises a base membrane and a separator coating arranged on at least one side of the base membrane; and the separator coating comprises a second electrolyte solution absorbent; and
in the direction from the side of the current collector where the tab is arranged to the other side opposite thereto, a mass content of the second electrolyte solution absorbent in a region of a side of the separator coating close to the tab is greater than or equal to a mass content of the second electrolyte solution absorbent in a region of the other side opposite thereto, and a mass content of the second electrolyte solution absorbent in a region of at least one side of the separator coating close to the tab is greater than a mass content of the second electrolyte solution absorbent in a region of the other side opposite thereto.

10. The electrode assembly according to claim 9, wherein in the direction from the current collector to the side facing away from the current collector, the mass content of the first electrolyte solution absorbent in the active layer is greater than the mass content of the second electrolyte solution absorbent in the separator coating.

11. The electrode assembly according to claim 9 or 10, wherein the first electrolyte solution absorbent and the second electrolyte solution absorbent each independently comprise one or more of polymethyl methacrylate, polymethyl acrylate, polyethyl acrylate, polyvinyl acetate, polyacrylamide, polyacrylic acid, and polyacrylonitrile.

12. The electrode assembly according to any one of claims 9 to 11, wherein the mass content of the first electrolyte solution absorbent in the active layer and the mass content of the second electrolyte solution absorbent in the separator coating are each independently greater than 0 and less than or equal to 8%; and optionally greater than or equal to 1% and less than or equal to 6%.

13. A preparation method for an electrode assembly, comprising:
preparing an active layer on at least one side of the current collector in a thickness direction thereof, and arranging a tab on one side of the current collector in a height direction thereof;
controlling, in a direction from one side of the current collector where the tab is arranged to the other side opposite thereto, a liquid absorption capacity of a region of a side of the active layer close to the tab to be greater than or equal to a liquid absorption capacity of a region of the other side opposite thereto, and a liquid absorption capacity of a region of at least one side of the active layer close to the tab to be greater than a liquid absorption capacity of a region of the other side opposite thereto; and
controlling, in a direction from the current collector to a side facing away from the current collector, a liquid absorption capacity of a region of a side of the active layer close to the current collector to be greater than or equal to a liquid absorption capacity of a region of the other side opposite thereto, and a liquid absorption capacity of a region of at least one side of the active layer close to the current collector to be greater than a liquid absorption capacity of a region of the other side opposite thereto.

14. The preparation method for the electrode assembly according to claim 13, wherein the preparation method for the electrode assembly further comprises:
controlling, in the direction from the side of the current collector where the tab is arranged to the other side opposite thereto, a liquid absorption capacity of a region of a side of a separator contained in the electrode assembly close to the tab to be greater than or equal to a liquid absorption capacity of a region of the other side opposite thereto, and a liquid absorption capacity of a region of at least one side of the separator close to the tab to be greater than a liquid absorption capacity of a region of the other side opposite thereto; and
controlling, in the direction from the current collector to the side facing away from the current collector, the liquid absorption capacity of the active layer to be greater than the liquid absorption capacity of the separator.

15. A battery comprising the electrode assembly according to any one of claims 1 to 12.

16. An electrical apparatus comprising the battery according to claim 15.
